# EUROPEAN PATENT APPLICATION

(11) **EP 4 640 097 A1**
(43) Date of publication of application: **29.10.2025**
(21) Application number: 25172009.0
(22) Date of filing: 23.04.2025
(51) Int. Cl.: A41G 5/02, B33Y 80/00

(54) **ARTIFICIAL EYELASH SEGMENT SYSTEM**

(30) Priority: 26.04.2024 US 202463639534 P; 25.10.2024 US 202463711946 P
(71) Applicant: TAD Beauty, Inc., Reno Nevada 89521 (US)
(72) Inventor: NGUYEN, Thanh, Reno, 89502 (US)
(74) Representative: Withers & Rogers

(57) **Abstract**

Embodiments described herein relate to an artificial eyelash system, such as an artificial eyelash segment (100) having integrally-formed artificial hairs (102-105) and a base structure (106) with an array of coupling members (108), and/or a support frame (700) defining a spine (702), engagement features (706), and an array of coupling members (704) integrally formed. In some cases, the artificial eyelash segment (100) and/or the support frame (700) may be formed using a three-dimensional printing process or similar manufacturing techniques. The array of coupling members (108) may protrude from the base structure (106) in a direction towards the wearer's natural eyelashes to increase an available surface area that bonds to the wearer's natural eyelashes and thereby increases the wear time of the artificial eyelash system.

## Description

### TECHNICAL FIELD

Embodiments described herein relate to artificial eyelashes. In particular, embodiments described herein relate to artificial eyelash segments or clusters where one or more portions are molded or formed using a 3D printing process.

### BACKGROUND

Cosmetic products, such as artificial eyelashes, improve or enhance a wearer's appearance without surgical treatments or other potentially invasive methods. Artificial eyelash segments and/or artificial eyelash clusters are a convenient method to add volume to a wearer's natural eyelashes at home. However, some artificial eyelashes may have a relatively short life and may need frequent replacement or repair. The systems and techniques described herein may provide artificial eyelashes without some of the drawbacks of traditional solutions.

### SUMMARY

Embodiments described herein may be directed to a monolithic eyelash segment. The monolithic eyelash segment may include a base structure defining an elongate body, a set of individual artificial lash hairs integrally formed with the base structure and extending outwardly from the elongate body along a first direction, and an array of coupling members integrally formed with the base structure. The array of coupling members may extend outwardly from the elongate body in a second direction that is transverse to the first direction. This array of coupling members may be configured to structurally engage a set of natural lashes of a wearer to the monolithic eyelash segment.

In some examples, the base structure, the set of individual artificial lash hairs, and the array of coupling members are integrally formed using a three-dimensional (3D) printing process. Each coupling member of the array of coupling members may be configured to extend upwards towards and between the natural lashes of the wearer. Each coupling member of the array of coupling members may define a respective first end and a second end, the second end curved towards the first end to at least partially define a hook shape. In some examples, a respective second end of a first coupling member from the array of coupling members is configured to at least partially wrap around a natural lash from the set of natural lashes.

In some cases, each coupling member of the array of coupling members defines a respective protrusion configured to be positioned between adjacent natural lashes from the set of natural lashes. The array of coupling members may be arranged linearly along the elongate body. In some non-limiting examples, the array of coupling members includes at least thirty (30) coupling members.

In some embodiments described here, a monolithic eyelash segment may include: a base structure defining an elongate body; a set of individual artificial lash hairs integrally formed with the base structure and extending outwardly from the elongate body along a first direction; and a coupling member integrally formed with the base structure extending outwardly from the elongate body in a second direction different from the first direction. The first direction and the second direction may define an angle less than 180 degrees; the base structure, the set of individual artificial lash hairs, and the coupling member is formed from a thermoplastic polymer material; and the base structure, the set of individual artificial lash hairs, and the coupling member are integrally formed without the use of adhesives.

In some examples, the set of individual artificial lash hairs include a first row of artificial lash hairs and a second row of artificial lash hairs; and the first row of artificial lash hairs and the second row of artificial lash hairs are vertically distributed with respect to the first direction at the base structure. In some cases, the elongate body defines a first end and a second end; and at least one of the first end or the second end define a mating surface configured to align to another monolithic eyelash segment. In some cases, the mating surface defines a serrated surface configured to engage to an end of another monolithic eyelash segment. In a non-limiting example, the coupling member is configured to extend between a wearer's natural lashes in an applied position. The base structure may be configured to be positioned under a wearer's natural lash. In some cases, first direction is oblique with respect to a surface of the elongate body.

According to examples described herein, a monolithic eyelash segment may include a base structure defining a width of the monolithic eyelash segment; an array of artificial hairs extending from the base structure and distributed along the width of the monolithic eyelash segment, each artificial hair of the array of artificial hairs defining a respective curvature; and an array of coupling members extending from the base structure and configured to extend between one or more natural lashes of the user in a substantially transversal direction.

In some cases, the monolithic eyelash segment is formed via a three-dimensional printing process. In non-limiting examples, a length of a first artificial hair of the array of artificial hairs is less than a length of a second artificial hair of the array of artificial hairs. In some embodiments, the base structure is curved along the width of the monolithic eyelash segment.

The array of coupling members may be configured to partially wrap around the wearer's natural lash. Each coupling member of the array of coupling members may define a textured surface configured to increase a contact surface area between a wearer's natural lash and the monolithic eyelash segment.

In some embodiments described herein, an artificial eyelash system may include a support frame having: a spine defining an elongate body; an array of coupling members extending from the spine in a first direction, the array of coupling members configured to extend between the natural lashes of a wearer in a substantially transversal direction with respect to the natural lashes;
an array of engagement posts extending from the spine in a second direction, wherein an angle between the first direction and the second direction is between 60 degrees and 160 degrees; an artificial eyelash assembly coupled to a particular engagement post of the array of engagement posts, the artificial eyelash assembly comprising a plurality of artificials hairs having a proximate end and a distal end; and a first adhesive composition bonding the proximate end of the plurality of artificial hairs of the artificial eyelash assembly to the particular engagement post; wherein the array of coupling members of the support frame is configured to be coupled to the natural lashes of the wearer using a second adhesive composition.

In some cases, the artificial eyelash assembly may include a bonded portion having a third adhesive composition bonding the plurality of artificial hairs to each other at a location between the proximate end and the distal end; subsequent to the third adhesive of the bonded portion being cured, the proximate end of the plurality of hairs remains substantially free of the third adhesive; and the third adhesive of the bonded portion is cured prior to the first adhesive composition bonding the proximate end of the plurality of hairs to the particular engagement post.

In some cases, a portion of the plurality of artificial hairs between the bonded portion and the proximate end may be configured to at least partially wrap around the engagement post. The plurality of artificial hairs may include between three to twenty artificial hairs; and the plurality of engagement posts may include between five to fifteen engagement posts.

In some examples, the first adhesive is different from the second adhesive; and a curing time of the first adhesive is less than a curing time for the second adhesive.

In some embodiments, a respective diameter of each engagement post of the plurality of engagement posts is between 0.02 mm and 0.2 mm; and a respective length of each engagement post of the plurality of engagement posts is between 1 mm and 5 mm.

The angle between the first direction and the second direction may be 90 degrees.

In some embodiments described herein, an artificial eyelash segment may include a support frame having: a spine having a length that defines a length of the artificial eyelash segment; an array of engagement posts, each engagement post of the array of engagement posts protruding perpendicularly from the length of the spine; a plurality of artificial eyelash assemblies, each artificial eyelash assembly of the plurality of artificial eyelash assemblies defining: a bonded portion coupling a plurality of artificial hairs of a respective artificial eyelash assembly to each other, the bonded portion positioned between a proximate end and a distal end of the respective artificial eyelash assembly; and a base portion between the proximate end and the bonded portion, the plurality of artificial hairs in the base portion wrapped at least partially around a respective engagement post of the array of engagement posts; and a UV-cured adhesive composition adhering each artificial eyelash assembly of the plurality of eyelash assemblies to a respective engagement post of the plurality of engagement posts.

In some cases, the support frame includes an array of coupling members protruding from the spine, the array of coupling members defining an angle between 60 degrees and 160 degrees with respect to the array of engagement posts, the array of coupling members configured to be positioned crosswise with respect to a wearer's natural eyelash and at least partially extending through the interstices between adjacent natural eyelashes.

In some embodiments, the support frame is a unitary structure.

In some examples, each coupling member of the array of coupling members is separated by a first separation distance with respect to an adjacent coupling member; and each engagement post of the array of engagement posts is separated by a second separation distance with respect to an adjacent engagement post, the second separation distance larger than the first separation distance. In some cases, a particular proximate end corresponding to a particular eyelash assembly may be positioned at a distance with respect to the spine.

According to some embodiments, for each artificial eyelash assembly: the respective plurality of artificial hairs splay with respect to each adjacent artificial hair at the distal end; and the plurality of artificial hairs includes between three and twenty artificial hairs. The support frame may be formed from a first material comprising a thermoplastic polymer; and the plurality of artificial eyelash assemblies are formed from a second material different from the first material.

According to some embodiments described herein, a support frame for an artificial eyelash segment may include: a spine defining a first length and a flat surface along the length; an array of engagement posts protruding from the flat surface, each engagement post of the array of engagement posts having a second length and configured to engage to respective artificial eyelash assemblies; and an array of coupling members protruding from a surface of the spine different from the flat surface, each coupling member from the array of coupling members defining a third length less than the first length, the array of coupling members configured to interlace with a wearer's natural eyelashes such that the array of coupling members are positioned crosswise with respect to the wearer's natural eyelashes in a worn configuration.

In some examples, each engagement post of the array of engagement posts defines a substantially cylindrical profile having a first cross-sectional area; and each coupling member of the array of coupling members define a respective second cross-sectional area that is less than the first cross-sectional area.

The array of engagement posts may define a 90 degree angle with respect to the array of coupling members. In some cases, the spine, the array of engagement posts, and the array of coupling members are a unitary member formed by a molding process.

In some embodiments, each coupling member of the array of coupling members define a separation distance between adjacent coupling members, the separation distance configured to receive no more than two natural eyelashes crosswise. The spine and the array of engagement features may be configured to be positioned under the wearer's natural eyelash.

### BRIEF DESCRIPTION OF THE DRAWINGS

Reference will now be made to representative embodiments illustrated in the accompanying figures. It should be understood that the following descriptions are not intended to limit this disclosure to one included embodiment. To the contrary, the disclosure provided herein is intended to cover alternatives, modifications, and equivalents as may be included within the spirit and scope of the described embodiments, and as defined by the appended claims.
FIG. 1A depicts a plan view of an example monolithic eyelash segment, such as described herein.
FIG. 1B depicts an elevation view of an example monolithic eyelash segment, such as described herein.
FIG. 1C depicts a front view of an example monolithic eyelash segment, such as described herein.
FIGs. 2A-2F depict a detail view of coupling features of an example monolithic eyelash segment, such as described herein.
FIGs. 3A-3B depict example application methods of an example monolithic eyelash segment.
FIG. 4 depicts an example of multiple monolithic eyelash segments applied to a wearer.
FIGs. 5A-5D depict a partial cross sectional view of two applied eyelash segments.
FIGs. 6A-6C depict additional example eyelash segments.
FIG. 7A depicts an example perspective view of a support frame. FIG. 7B depicts an example top view of the support frame, such as described herein.
FIGs. 8A-8C depict example side views of the support frame, such as described herein.
FIGs. 9A-9D depict example artificial eyelash assemblies, such as described herein.
FIG. 10A-10B depict example artificial eyelash systems.
FIGs. 11A-11C depict example cross-sectional view of the support frame and the artificial eyelash assembly.
FIG. 12 depicts a simplified diagram of the artificial eyelash system coupled to a wearer's natural lash, such as described herein.
FIG. 13 depicts an example support frame, such as described herein.

The use of the same or similar reference numerals in different figures indicates similar, related, or identical items.

The use of cross-hatching or shading in the accompanying figures is generally provided to clarify the boundaries between adjacent elements and also to facilitate legibility of the figures. Accordingly, neither the presence nor the absence of cross-hatching or shading conveys or indicates any preference or requirement for particular materials, material properties, element proportions, element dimensions, commonalities of similarly illustrated elements, or any other characteristic, attribute, or property for any element illustrated in the accompanying figures.

Additionally, it should be understood that the proportions and dimensions (either relative or absolute) of the various features and elements (and collections and groupings thereof) and the boundaries, separations, and positional relationships presented therebetween, are provided in the accompanying figures merely to facilitate an understanding of the various embodiments described herein and, accordingly, may not necessarily be presented or illustrated to scale, and are not intended to indicate any preference or requirement for an illustrated embodiment to the exclusion of embodiments described with reference thereto.

### DETAILED DESCRIPTION

Embodiments described herein relate to artificial eyelash segments or clusters (hereinafter "eyelash segments"). In particular, embodiments described herein relate to artificial eyelash segments, or support structures which are formed as a unitary structure or monolithic part. As described herein, a monolithic artificial eyelash segment and/or a support frame for artificial eyelash assemblies may be formed using a three-dimensional printing process or other similar manufacturing technique in which the various features and structures of the eyelash may be integrally formed. As described herein, the terms "integrally formed" may be used to refer to elements or components that are formed from the same material as a monolithic or unitary structure.

Artificial eyelashes are used in the beauty industry to increase the volume of lashes and to enhance the eyes of a wearer. In many cases, however, the wear time of artificial eyelashes applied at home may be limited. In part, this is due to the construction of the artificial eyelashes, which generally are formed as flat base that provides a limited available surface area to which the natural eyelashes can adhere.

The examples and embodiments described herein are directed to eyelash segments that can be used to create a full artificial eyelash. While many of the examples are directed to eyelash segments, the same or similar techniques may also be applied to a full artificial eyelash. The eyelash or eyelash segment may include various features or structures that may improve the durability of the lash and also enhance the engagement between the artificial lash and the wearer's natural eyelashes. For example, as described herein, artificial eyelashes may be formed as a unitary or monolithic structure, which may be used to form the base structure of the lash, artificial lash hairs extending from the base structure, and other structures or features of the lash all of which may be integrally formed. In order to produce the unitary or monolithic lash, a molding or polymer printing process may be used.

Also, as described herein, the eyelash or eyelash segment may include features or structures that improve attachment of an artificial lash with the natural lash of the wearer or user. For example, an eyelash or eyelash segment may include structures or features extending from the base which increase a surface area that adheres to the natural eyelashes, thereby improving the wear time and/or life of the eyelash segment. These structures or features of the eyelash segment may include an array of coupling members. The array of coupling members may be integrally formed with the eyelash segment and may protrude from the base structure at a direction that is transverse to or, in some cases, perpendicular to, a direction of the artificial lash hairs. The array of coupling members may be protrusions that protrude from the base structure in a direction towards the natural eyelashes (when applied). When applied to a user's natural eyelashes, the protrusions may extend between the natural eyelashes (e.g., along the sides of the natural eyelashes and between adjacent natural lashes). The portion of each protrusion positioned between the natural eyelashes may be adhered to the natural eyelashes in a way that strengthens the bond between the eyelash segment and the natural eyelashes (e.g., by increasing the bonded surface area). In the aggregate, the improved adhesion provided by each protrusion (e.g., on the order of 5, 10, 50, 100, or more) improves the structural coupling to a natural lash.

In some cases, each of the coupling members may be curved or otherwise shaped at an end to provide a hooking effect when applied to the natural lashes. In this example, each of these coupling members are configured to wrap or "hook" around a portion (e.g., side and top) of a respective natural eyelash. This wrapping configuration may cause the coupling members to latch on to the natural eyelashes and to further increase the adhesion surface area. In some cases, a coupling member that wraps around the eyelashes creates a releasable mechanical engagement that may support the segment without an adhesive. Furthermore, the coupling member may also improve the coupling strength to the natural eyelash compared to adhesive alone.

In general, and as discussed above, the eyelash segments described herein may be a monolithic or unitary piece. In some examples, the eyelash segment is formed using a three-dimensional printing process or a similar process. In this example, the artificial hairs, base structure, and array of coupling members are integrally formed using a common material and a common process. When employing a three-dimensional printing process, no application of heat, adhesives, or other coupling components may be required to couple and/or assemble an eyelash segment, resulting in a segment with substantially uniform properties (e.g., flexibility, stiffness, and the like).

In some examples, one or more monolithic structures formed via a 3D printing, injection molding, or similar process may be part of an artificial eyelash system. In particular, the system may include a support frame. The support frame may be a primary body of the system and act as the support structure for different artificial eyelash assemblies. The support frame may include a spine which defines an elongate body. In some cases, the spine defines a width of the system (e.g., defines a width of a segment or a width of a lash strip). The support frame may also define an array of coupling members and an array of engagement posts, each protruding (and supported by) the spine. The array of coupling members may extend in a first direction, such that each coupling member is substantially transversal with respect to a wearer's natural lash. The array of coupling members may be configured to extend between one or more natural hairs (e.g., may "comb" the natural lashes). The array of engagement posts may extend in a second direction, different from the first direction. In some embodiments, the engagement posts and the coupling members define a 90-degree angle. In other embodiments, the engagement posts and the coupling members define an oblique angle, such as an angle between 60 degrees and 160 degrees.

The artificial eyelash system may also include an artificial eyelash assembly, or a group thereof. The artificial eyelash assembly may be a group of preassembled artificial hairs, such as an eyelash fan, an eyelash cluster, or the like. Each of the artificial eyelash assemblies can be adapted to couple to each engagement post, such to create a segment-like artificial lash that may be applied to a wearer's natural lash once assembled (e.g., under a natural lash line). More generally, the artificial eyelash assembly may include a plurality of artificial hairs having a proximate end and a distal end. The system may also include an adhesive composition that bonds the proximate end of the plurality of hairs of the artificial eyelash assembly to each particular engagement post. Once assembled (e.g., once the multitude of artificial eyelash assemblies are coupled to a respective engagement post), a second adhesive composition may be used to couple the system to the wearer's natural lash. In some cases, the system may further include a third adhesive which bonds the plurality of hairs together to form the artificial eyelash assembly prior to applying the first adhesive and the second adhesive.

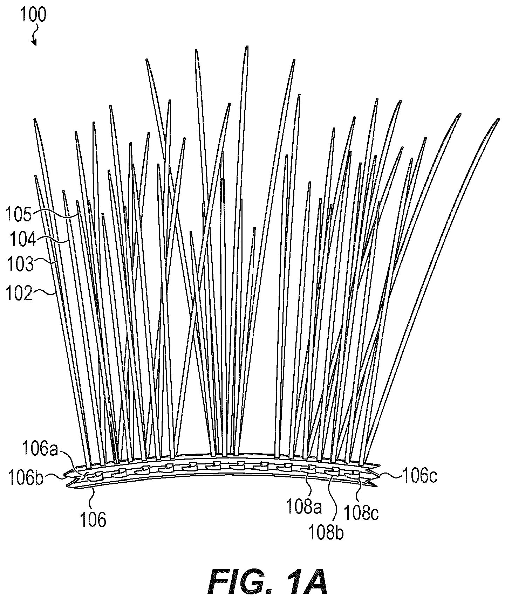

These foregoing and other embodiments are discussed below with reference to FIGs. 1A-13. However, those skilled in the art will readily appreciate that the detailed description given herein with respect to these figures is for explanation only and should not be construed as limiting.

FIG. 1A shows a plan view of an example monolithic eyelash segment 100. As explained above, the monolithic eyelash segment 100 may define structures, such as an array of coupling members, which help to improve the wear time of the eyelash segment. These structures engage with the natural eyelashes of a wearer to increase the wear time of the lashes by increasing a contact surface area where an adhesive can bond and by mechanically engaging with the natural eyelashes.

More generally, the monolithic eyelash segment 100 may include a set of artificial lash hairs, e.g., 102-105. Each of the artificial lash hairs may extend from a base structure 106 and spread outwards (e.g., away from a wearer's eye in an applied configuration) to add volume to the natural lashes. Each individual artificial lash hairs 102-105 or two or more artificial lash hairs may have distinct or unique lengths, curvatures, and may define an angle (e.g., ninety degrees or other non-zero angles in any direction) from the base structure, which may vary per each artificial lash hair. Using some example manufacturing methods, such as three-dimensional printing, each artificial lash hair may be different without increasing the manufacturing time and/or cost of the eyelash segment.

The set of artificial lash hairs 102-105 may be integrally formed with a base structure 106. For example, the base structure 106 may be formed using the same manufacturing process as the artificial lash hairs 102-105 and may be formed from a same material as the artificial lash hairs 102-105. For example, a three-dimensional printing process or similar may be used to form the monolithic eyelash segment 100. The base structure 106 provides a structure from which the artificial lash hairs may extend, a structure from which each coupling member (e.g., 108a-108c) of the array of coupling members 108 may extend, and defines a region that is configured to adhere to a portion of the natural lash hairs. In some examples, the base structure 106 may be used as a clamping area for applicators, tweezers, or the like, to apply the artificial lash segment 100 to a wearer's natural lashes.

The base structure 106 may define an elongate shape along which artificial lash hairs are distributed. The base structure 106 defines a first end 106b and a second end 106c. In some examples, each of the first end 106b and the second end 106c defines a mating feature configured to couple with adjacent artificial lash segments. In this configuration, a user can better align the application of the artificial lash segments. In some examples, the mating features can help prevent overlapping of artificial eyelash segments for a more natural look for the wearer and to increase the surface area of the artificial lash segment in contact with the natural lashes, the natural eyelash, and/or other portions of the wearer's eyelid.

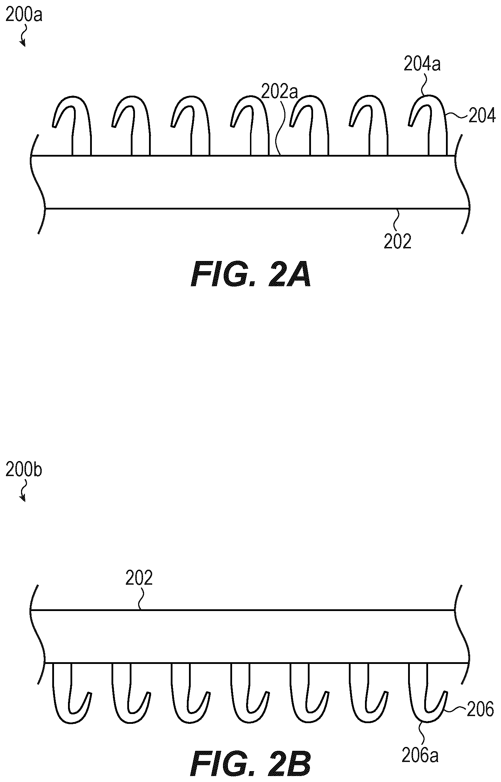

The artificial eyelash segment 100 depicted in FIG. 1A includes an array or set of coupling members 108. In some examples, each coupling member, e.g., 108a-108c of the array of coupling members 108 extends substantially perpendicularly with respect to the artificial hairs 102-105, in a direction towards the natural lashes when the artificial lash segment is applied. The array of coupling members 108 may define a variety of shapes, some examples of which are provided in FIGs. 2A-2F below.

Generally, the array of coupling members 108 may be distributed along a top surface 106a of the base structure 106. In some cases, the array of coupling members 108 may be distributed linearly along the top surface 106a. In other examples, the array of coupling members 108 may define at least two rows that are distributed along the top surface 106a. In other cases, the array of coupling members may be distributed randomly along the top surface 106a of the base structure. As with the base structure 106 and the artificial hairs 102-105, the array of coupling members 108 may be formed concurrently with the base structure 106 and with the artificial hairs 102-105 to define a monolithic eyelash segment 100. In some cases, due to its manufacturing method, such as three-dimensional printing, the array of coupling members may have distinct shapes that can be distinctly formed without increasing the manufacturing time of each eyelash segment.

In general, the monolithic eyelash segment described herein and/or the support frame for an artificial eyelash system described herein may be formed using a micro three-dimensional printing process or a microscale additive manufacturing process, such as microstereolithography, projection microstereolithography, two-photon polymerization, electrochemical deposition, or the like. In these examples, the eyelash segment is formed layer by layer. Each layer formed and/or deposited may be in the order of nanometers, micrometers, or millimeters, depending on the complexity and/or dimension of the eyelash segment.

In some cases, the additive manufacturing process is a vat polymerization process. In particular, a vat with a photopolymer resin is used as the material for forming the eyelash segment. The photopolymer resin is configured to solidify in response to exposure to a particular wavelength of light, such as UV light, a near-infrared femtosecond laser, or the like. In some cases, the photopolymer resin may include additives, such as dyes to impart a particular color to the eyelash segment, and/or to control the properties of the resin (e.g., viscosity, curing time, and the like). To form the eyelash segment, a platform is lowered into the vat such that the resin covers a surface of the platform. A light, such as a UV light or a laser, is used to selectively solidify the layer of the resin covering the platform. Each layer that is solidified may correspond to a cross section of the eyelash segment. In some cases, the UV light may be a projection (e.g., a digital light processing projector) that projects a 2D pattern onto the layer, thereby quickly curing the layer. In other examples, the light is a laser beam with a horizontal movement platform, mirrors, prisms, and other light redirection components that allows the beam to travel along the cross section to cure the photopolymer resin. As each layer is cured, the platform moves to the next layer (e.g., over the next layer). Once each layer is formed, the eyelash segment is retrieved and excess resin is removed. In some examples, the eyelash segment may be subjected to post-processing processes such as a surface treatment, removal of uncured resin via a solvent bath, and the like.

In some examples, to form the eyelash segment and/or the support frame, a resin is injected or extruded in order to be deposited in layers. For example, the three-dimensional printing process may include a printing nozzle or deposition head and a precision motion control system. The printing nozzle may include a polymeric solution, resin, paste, molten polymer, or the like. As pressure is applied, the material exits the nozzle and is deposited onto a platform. A precision motion control system may control the movement and/or the amount of material deposited to ensure accurate layer-by-layer fabrication of the eyelash segment. In other examples, an inkjet technology may be employed, such as electro spinning, direct ink writing, electrohydrodynamic printing, or the like. In this example, droplets of material are deposited onto a substrate or platform to form each layer of the eyelash segment. To achieve a micro-scale or small scale used for manufacturing the eyelash segment, an electric field may be applied to reduce the droplet size deposited and generate a stream of fluid having a small (e.g., micro-sized, nano-sized) diameter. Once cured, in some cases, additional post-processing may be performed to remove excess material and/or to enhance the texture and/or color of the eyelash segment.

In some embodiments, the eyelash segment and/or the support frame, an injection molding process may be used. In some examples, a thermoplastic material may be injected into a cavity or mold at a high pressure. Once the thermoplastic cools and solidifies, the formed piece may be trimmed and/or otherwise processed.

In some examples, the above-mentioned processes may be applied to form a support frame. The support frame may be configured to support and/or accept artificial eyelash assemblies (e.g., coupled along the support frame) to form an artificial eyelash segment. In comparison to the monolithic eyelash segment 100, the support frame may not include artificial hairs formed as a unitary piece. Rather, the support frame may include engagement structure or posts to couple to different eyelash segments. The support frame may be a unitary piece.

These foregoing examples of technologies employed to integrally form the eyelash segment. These technologies are described by way of illustration and are not exhaustive. One of skill in the art would appreciate that alternate, fewer, or additional operations may be used for particular embodiments.

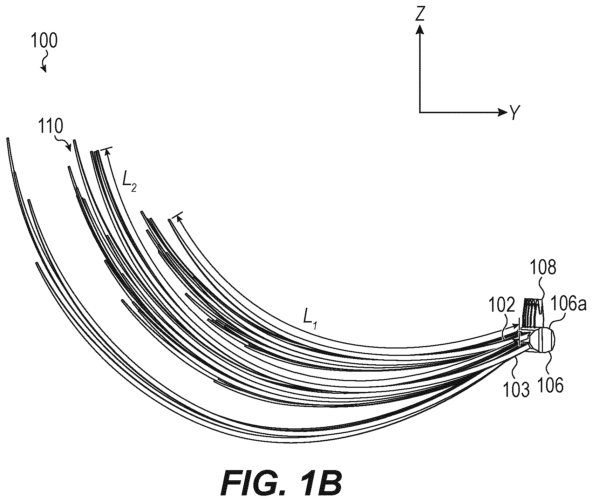

FIG. 1B shows an elevation view of the monolithic eyelash segment 100. As depicted, a monolithic eyelash segment may include multiple layers of artificial hairs along a z-direction of the eyelash segment 100. Each artificial hair may have a unique angle with respect to the base structure 106, and a unique position (e.g., along the z-direction) when formed integrally, compared to traditional eyelash segment manufacturing processes. As one example, an artificial hair 102 may extend from the base structure 106 at a first angle and have a first length L1. Artificial hair 103 may extend from a portion of the base structure 106 below (with respect to the z-direction) the artificial hair 102. The artificial hair 103 may have a length L2, which is greater than length L1, in some examples. In some cases, the monolithic eyelash segment 100 may include artificial hairs protruding from different elevations of the base structure 106. Due to this configuration, the eyelash segment 100 may add an appearance of more volume to a user's lash line without the need to stack multiple eyelash segments under each other. In other words, in traditional eyelash segment construction, only a single "row" of hairs is generally achieved due to the manufacturing process (e.g., a cluster, group, or individual artificial hairs heat fused together results in a single row of hairs along the base). Thus, some wearers of traditional eyelash segments may opt to stack multiple eyelash segments to create more volume. In the example provided in FIG. 1B, the monolithic eyelash segment 100 may include vertically-distributed artificial hairs that define multiple "rows" or levels of artificial lash hairs along the height of the lash. As a further benefit, this configuration may reduce the weight of the eyelash segment due to stacking. This configuration may also enable use of thinner cross sections (e.g., diameter) for each artificial hair to achieve a full look, thereby further reducing the weight of the eyelash segment without decreasing the volume of the eyelash segment.

More generally, each artificial hair 102 and 103 may extend outward (e.g., along a y-direction) with respect to the base structure 106. Additionally, each artificial hair may curve upwards (z-y direction) towards a distal end 110 of the eyelash segment. Each of these curvatures may correspond to standard lash curvatures, such as B, C, CC, D, J, and the like. In some cases, each artificial hair may be a different curvature with respect to other artificial hairs.

The coupling members 108 may protrude along the z-direction with respect to the top surface 106a of the base structure 106. The coupling members 108 are configured to extend upwards towards the natural eyelash of the wearer while the artificial hairs 102, 103 are configured to extend away from the eye (e.g. follow a general direction of the natural eyelashes). The coupling member 108 and the artificial hairs 102, 103 may extend in directions which are substantially perpendicular to each other, in some examples. In some examples, the coupling members 108 may be referred to as "microstructures," and may be 25 to 100 micrometers, 50 to 20 micrometers, 30 to 500 micrometers, or 50 to 300 micrometers in height. In some cases, the spacing between the microstructures may be 50 to 500 micrometers, 50 to 1000 micrometers, 0.05 to 2 mm, and the like.

In some examples, the coupling members 108 may have a diameter of between 0.02 mm and 0.05 mm, between 0.02 mm and 0.25 mm, between 0.02 mm and 0.3 mm. The height of the coupling members 108 may be between 0.02 mm and 0.05 mm, between 0.02 mm and 0.25 mm, between 0.02 mm and 0.3 mm, 0.02 mm and 1 mm, or 0.05 mm and 2 mm.

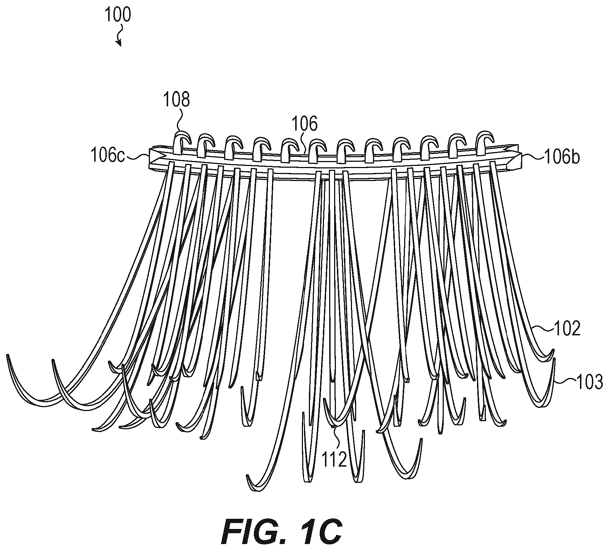

FIG. 1C shows the monolithic eyelash segment 100 as viewed from the top of the eyelash. As depicted in the view, the coupling members 108 may include one or more features that are configured to engage with the natural lash to improve the wear time of the eyelash segment. These features may be in the scale of millimeters or micrometers such that the coupling members 108 are minimally visible when the eyelash segment is applied. Details on configurations for the coupling members 108 are described as to FIGs. 2A-2F below.

As shown in FIG. 1C, each of the artificial hairs may extend from the base structure 106 at different angles with respect to the base structure 106 along a width of the eyelash segment. For example, artificial hair 112 may extend obliquely with respect to the base structure 106 such that a crisscross eyelash design pattern is defined. This eyelash design pattern is provided as an example. Due to its forming as a monolithic piece, complex artificial hair shapes and configurations can be made. Similarly, complex yet small features of the coupling members 108 can be formed.

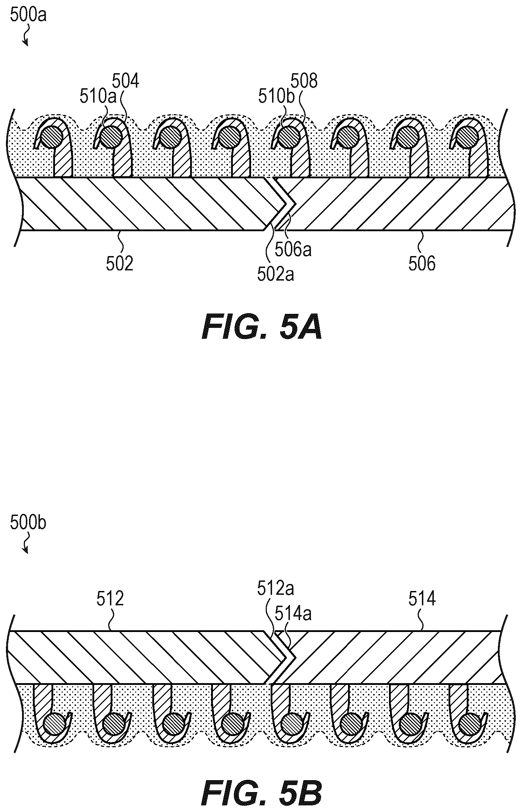

FIGs. 2A-2F depict example detail views of the coupling members along the base structure. These coupling members depicted may be incorporated in the example eyelash segment 100 from FIGs. 1A-1C. Additional coupling member configurations are also described below with respect to FIGs. 5A-5D.

FIG. 2A depicts an example configuration 200a of the coupling members 204. As depicted, coupling members 204 extend from a top surface 202a of a base structure 202. The coupling members 204 may generally protrude from the base structure 202 such that the coupling members 204 engage with and/or contact the natural eyelash of the wearer in an applied configuration. This engagement of the coupling members 204 with the natural eyelash enhances the coupling strength of the eyelash segment by increasing an available surface area that adheres to the wearer's eyelashes, waterline, lid, or other parts of the eye area.

In addition to increasing the surface area, the coupling members 204 may include one or more features configured to engage with the natural eyelash. For example, coupling member 204 may include a hook feature 204a. In this example, the coupling member 204 bends or curves towards the base structure 202 at a tip portion of the coupling member 204 such that the hook feature 204a catches or holds onto a natural eyelash hair. In other examples, the coupling member 204 may have a non-curved or other shape. In some cases, the hook feature 204a may be referred to as a curved feature, a hook, hook-like feature, catch, or other similar term. The hook feature 204a may define a partial loop and may include one or more barbs or other features that assist with retention.

More generally, each hook feature 204a may be configured to wrap around a portion of each eyelash. In some cases, each hook feature 204a vertically catches or holds to different eyelash hairs such that the eyelash segment can hang from the natural eyelashes. For example, the eyelash segment may be held by the coupling members 204 without the use of adhesives. In some cases, the adhesive is applied to the base structure 202 and to the coupling members 204 to further improve the wear time.

FIG. 2B shows another example configuration 200b of a coupling member 206. In this case, the eyelash segment may be configured to be applied to the top of the natural eyelash line of a wearer. Accordingly, the coupling members 206 may protrude from the base structure 202 in a downwards direction to engage with the natural eyelash. Similar to the coupling members 204 depicted in FIG. 2A, the coupling members 206 may have a hook feature 206a which bends or curves back towards the base structure 202 towards the tip of the coupling member 206. In this configuration, each hook feature 206a can partially wrap around each natural eyelash to increase the surface area and/or to mechanically engage to the natural eyelash-thereby increasing the wear time of the eyelash segment.

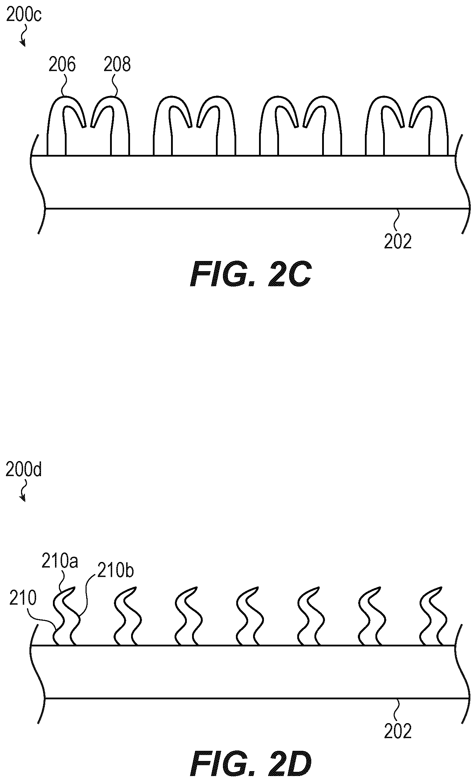

FIG. 2C shows another example configuration 200c of a coupling member configuration. In this example, the eyelash segment may include pairs of coupling members, such as coupling member 206 and 208, mirrored with respect to each other. Coupling member 206 may include a hook feature 206a and coupling member 208 may include a hook feature, which may be similar to the hook feature 204a and 206a. The hook feature for coupling member 206 may face a first direction while hook feature for coupling member 208 may face a second direction. In some cases, the first direction and the second direction are opposite each other (e.g., mirror imaged). This configuration may provide additional resistance from the hook features in a lateral direction (e.g., left and right of the page). For example, a movement in the first direction may cause the coupling member 206 to unhook while coupling member 208 may prevent movement and/or remain hooked to a different natural eyelash. When adhesive is applied, the eyelash segment has better adhesion and more resistance to movement with respect to the natural eyelashes. Due to the increased resistance to movement, the bonded interfaces between the eyelash segment and the natural eyelashes experience less wear and/or stress. Due to this opposing configuration, the wear time of the eyelash segment may improve.

FIG. 2D shows another example configuration 200d of a coupling member structure. In this example, a coupling member 210 may have multiple curves and/or a zigzag shape. For example, the coupling member may have a first hook feature 210a which may be configured to wrap around a portion on the natural lash. Further, the coupling member may have a second hook feature 210b which also may be configured to wrap partially around a portion of a natural lash. In this configuration, the multiple curves can be configured to engage with one or more natural eyelashes to increase a contact surface area of the eyelash segment and the natural lash. For example, the coupling member 210 may partially wrap around a first lash on a left side of the coupling member 210 and may partially wrap around a second lash on a right side of the coupling member 210. In some cases, the multiple and multilevel hook features 210a and 210b may help to accommodate natural eyelashes which are stacked and/or irregular with respect to each other.

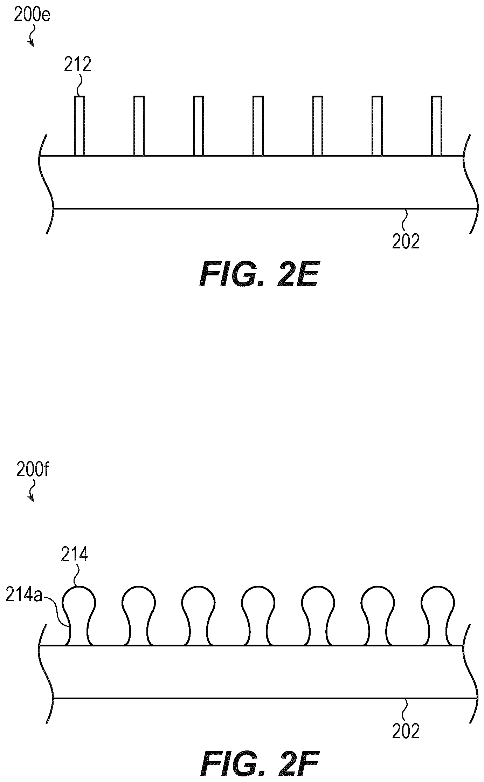

FIG. 2E shows another example configuration 200e of a coupling member. In this example, a coupling member 212 may be a tine or post which protrudes perpendicularly with respect to the base structure 202. The protrusion may have any suitable cross section, such as circular, oblong, square, rectangular, polygonal, and the like. Each tine or post may be configured to be positioned between the natural eyelashes when the eyelash segment is applied. Between the natural eyelashes, the tines or posts may contact the natural eyelash, thereby increasing an adhesion surface area of the eyelash segment to the wearer's lashes and improving the wear time of the eyelashes. In some examples, the tines or posts may extend diagonally or obliquely with respect to the base structure 202.

FIG. 2F shows another example configuration 200f of a coupling member. In this example, a coupling member 214 may have a bulbous portion and a narrower region 214a. Generally, the coupling member 214 may define curved surfaces to enable the natural lash to engage with the coupling members 214 smoothly. The narrower region 214a may be configured to partially trap and/or wrap around the natural eyelash to improve the wear time of the eyelash segment. In some cases, adjacent coupling members 214 may capture more than one natural eyelash.

Each of the coupling members 204, 206, 208, 210, 212, and 214 may generally be in the scale of millimeters or micrometers such that the coupling members can extend between the natural eyelash while being minimally visible when applied. The coupling members may be flexible such that a natural eyelash may bend or deform the coupling member for a comfortable fit. In examples where the coupling members hang or hook on to the natural eyelashes, the coupling member may be configured to be releasably coupled. For example, in response to the wearer pulling the eyelash segment to remove, the coupling members deflect to release the natural eyelash without breakage of the coupling member and without discomfort to the wearer.

Each of the coupling members 204, 206, 208, 210, 212, and 214 may be integrally formed with respect to the base structure and the artificial hairs and may be formed from the same materials. In some examples, the coupling members extend from and are coupled to the base structure without the use of adhesives, fasteners, welding, or additional heat fusion processes.

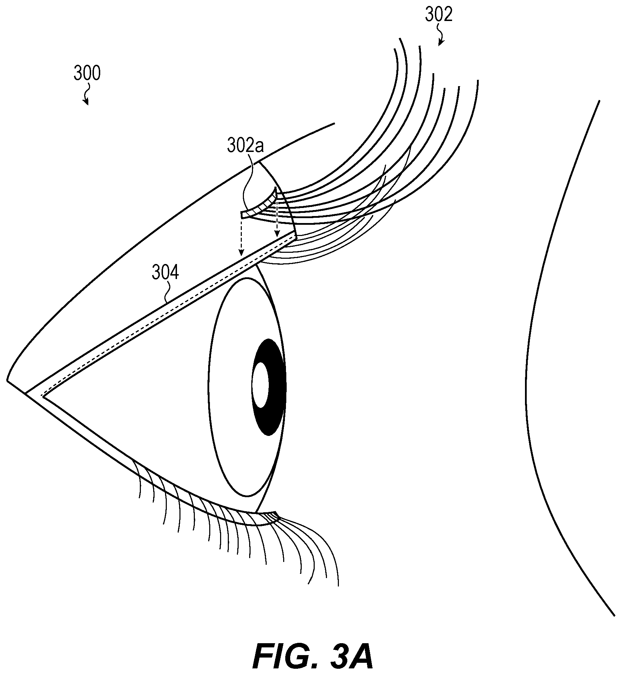

FIGs. 3A-3B show example application methods for an eyelash segment, such as eyelash segment 100 described in FIGs. 1A-1C. As shown in FIG. 3A, an eyelash segment 302 may be applied over the top of the natural eyelashes of a wearer. In particular, a base structure 302a of the eyelash segment 302 may be applied adjacent to the lash line 304. Because the eyelash segment in the case is applied to the top of the natural lashes, the coupling members of the eyelash segment 302 may protrude in a downward direction such that the coupling members engage with the natural eyelashes. To apply, an adhesive may be applied to the natural eyelashes (e.g., via an adhesive application) such that the adhesive contacts the base structure and the coupling members when the eyelash segment is positioned. The eyelash segment 302 is then positioned along a desired portion of the eye area, adjacent to the lash line and/or waterline. The eyelash segment 302 may then be pressed down (e.g., via a lash applicator tool) to set the adhesive and to engage the coupling members with respect to the natural eyelashes.

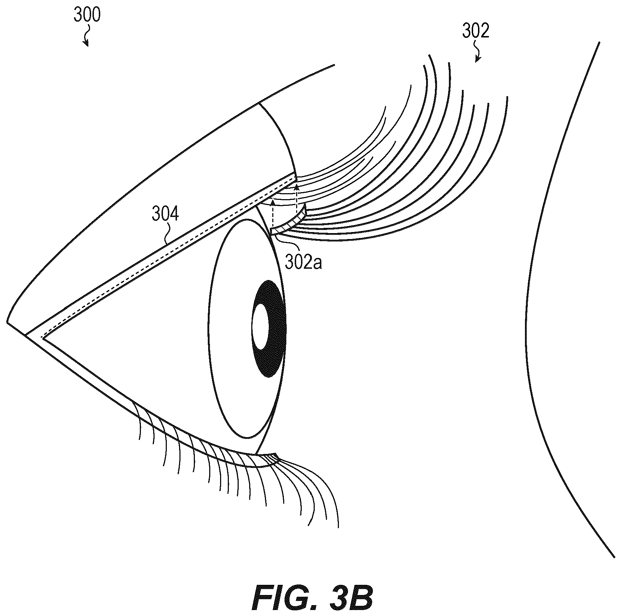

FIG. 3B shows an example where the eyelash segment 302 is applied to the bottom of the natural eyelashes of the wearer. Similar to the example described above, adhesive may be applied to the natural eyelashes or, alternatively, adhesive may be applied directly to the eyelash segment. The base structure 302a of the eyelash segment 302 may then be placed adjacent to the bottom of the eyelashes, towards a user's waterline. As described above, the eyelash segment 302 may be pressed against the natural eyelashes to set the adhesive and to engage the coupling members.

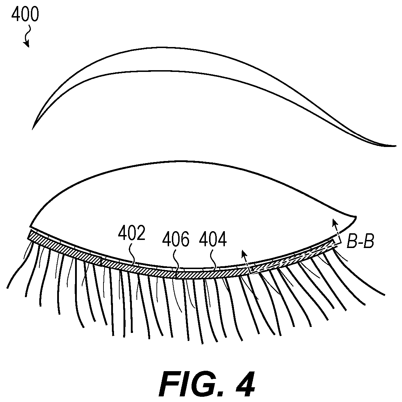

FIG. 4 shows an example configuration of multiple eyelash segments applied to a wearer. This configuration of multiple eyelash segments may be achieved via any of the methods described in FIGs. 3A-3B and may include any of the variations of coupling members described in FIG. 2A-2F. As depicted in the figure, multiple eyelash segments, such as eyelash segments 402 and 404 may be applied along the length of the lash line of a wearer. While the eyelash segments depicted may have a consistent width, in some configurations, the eyelash segments may be different widths, have different designs (e.g., hair arrangement, length, and thicknesses), or the like. For example, segments applied towards the inner eye of the wearer (e.g., towards the tear duct) may be shorter in width and may have shorter artificial hairs compared to eyelash segments applied towards the center and/or the outer corner of the eye.

In some cases, an end of an eyelash segment may abut with a respective end of another eyelash segment to create a more uniform look. For example, eyelash segment 402 and eyelash segment 404 may contact and/or couple to each other at region 406. In some cases, the ends of the eyelash segments 402 and 404 may be coupled via an adhesive. Alternatively or additionally, the eyelash segments 402 and 404 may include matching features that enable the ends to mate and/or fit with respect to each other. These features are described below as to FIGs. 5A-5D.

FIG. 5A shows a partial cross-sectional view of a configuration 500a of two eyelash segments applied to the eye of the wearer. As depicted, a first eyelash segment, having a base structure 502 and coupling members 504 may be positioned side by side (e.g., adjacent to) a second eyelash segment, having a base structure 506 and coupling members 508. Each of the first eyelash segment and the second eyelash segment are coupled to the natural lashes 510. More particularly, the base structure 502 and coupling members 504 may be coupled to a natural eyelash 510a via the adhesive 511 and/or by other mechanical connections, such as by wrapping the coupling member 504 over a portion of the natural eyelash 510a, thereby hooking to the natural eyelash 510a. Similarly, the base structure 506 and coupling members 508 may be coupled to a natural eyelash 510b via the adhesive 511 and/or via a mechanical connection from the coupling members 508. In some cases, a single natural lash engages with a single coupling member. In other examples, multiple natural lashes may be positioned between the coupling members and the multiple natural lashes may engage with a single coupling member.

While a first configuration of coupling members 504 and 508 are shown, it should be understood that the coupling members may be any shape and/or size, such as those described in FIGs. 2A-2F. Further, while the base structures 502 and 506 are shown as having a gap between the base structure and the natural eyelash in the applied position, the base structure(s) may contact the natural eyelashes (e.g., with a thin film of adhesive 511 inbetween).

The eyelash segments may be configured to engage with each other at the ends. For example, the base structure 502 of the first eyelash segment may include a first end 502a defining a first mating feature. The base structure 506 of the second eyelash segment may include a second end 506a defining a second mating feature, different from the first mating feature. In some cases, the first end 502a and the second end 506a may have complementary mating features that are configured to engage with each other. For example, the first end 502a may define diagonal lines and/or zigzags that mate with opposite diagonal lines defined by the second end 506a. This mating configuration may enable a user applying the lashes to align adjacent eyelash segments with respect to each other. Also, this mating configuration may allow the eyelash segments to contact each other at the ends, providing a more uniform look to the wearer's eyes.

FIG. 5B shows another configuration 500b of mating features of two adjacent eyelash segments applied to a wearer's natural eyelashes. In this configuration, the eyelash segments are applied to the top of the natural eyelashes, and thereby the coupling features protrude downward to engage with the natural eyelashes. Similar to FIG. 5A above, a first eyelash segment may have a base structure 512 defining a first end 512a configured to mate with a second end 514a of a base structure 514 of a second eyelash segment. The first and second ends, 512a and 514a, may have complementary features configured to engage with each other.

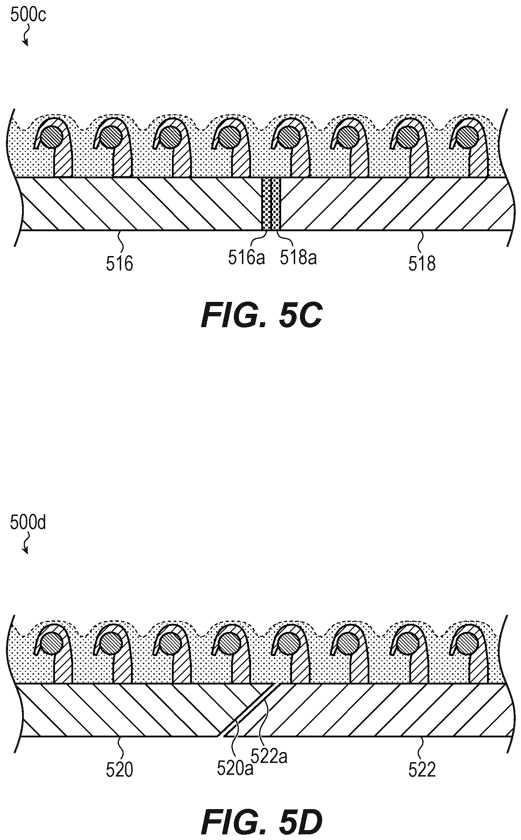

FIG. 5C shows another configuration 500c of mating features of two adjacent eyelash segments applied to a wearer's natural eyelash. In this configuration, a first eyelash segment having a base structure 516 may have an end 516a that includes a magnetic region. The second eyelash segment, having a base structure 518 and an end 518a, may include a ferromagnetic material configured to magnetically couple with the magnetic region at end 516a. In this configuration, both ends may be releasably coupled to each other. When a wearer applies the eyelash segment, the ends may be aligned by magnetically coupling to each other. More generally, the ends 518a and 516a may include magnetic materials, such as powders and the like, enabling the ends to magnetically couple to each other.

FIG. 5D shows another configuration 500d of mating features of two adjacent eyelash segments applied to a wearer's natural eyelash. In this configuration, a first end 520a, defined by a base structure 520 of a first eyelash segment, may define a first oblique surface while a second end 522a, defined by a base structure 522 of a second eyelash segment, may define a second oblique surface mirror imaged with respect to the first oblique surface. In this configuration, the first and second oblique surface provide a contact surface for each adjacent eyelash segment. This may help substantially align the eyelash segments with respect to each other. The oblique surfaces may also provide additional surface area for the eyelash segments to adhere to each other, thereby improving the wear time.

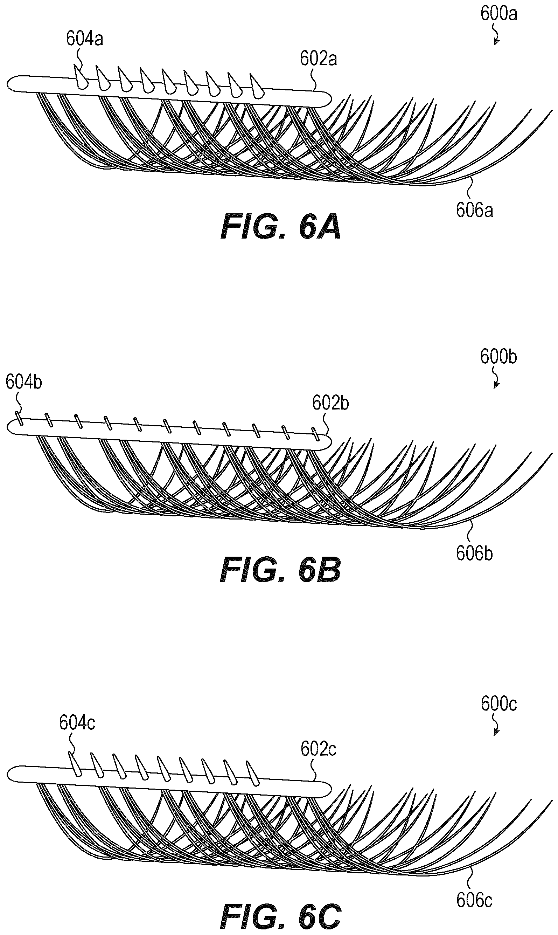

FIGs. 6A-6C depict example lash configurations having different variations of coupling members. The coupling members depicted in these examples may be used in combination with any of the other example lash configurations described herein and may be integrally formed as part of a monolithic lash, as described previously. For example, each of the lash configurations of FIGs. 6A-6C may be formed as lash segments and may be joined or abutted to adjacent lash segments using mating features (described above with respect to FIGs. 5A-56) or combined with other features described with respect to other example embodiments.

FIG. 6A depicts an example lash 600a having artificial lash hairs 606a that extend outwardly from a base structure 602a. Similar to as described previously, the lash hairs 606a may be integrally formed with the base structure 602a as part of a molding or printing process. Also similar to as described previously, the lash 600a may include coupling members 604a that extend outwardly from the base structure 602a. The base structure 602a, the lash hairs 606a and the coupling members 604a may define a monolithic eyelash or eyelash segment, similar to other examples described herein.

The coupling members 604a are configured to structurally engage a set of natural lashes of a wearer of the lash 600a. In this particular example, the coupling member 604a is formed from an array of 9 elements that extend outward from the base structure 602a. Other implementations may have more or fewer elements. In this example the spacing between adjacent coupling members 604a is approximately the same as the diameter of the base of each coupling member 604a. The spacing and size of the coupling members 604a may vary depending on the implementation. Each of the coupling members 604a is formed from a pointed structure having a base that is substantially wider than a tip or point of the coupling member 604a. The coupling members 604a may have a tapered or conical shape, as shown, which may assist with the installation of the lash 600a by separating adjacent natural eyelashes of the wearer to help assure that each coupling member 604a is placed between a pair of natural eyelashes. The tapered or conical shape may also provide increased rigidity and structural support to the coupling members 604a where the coupling members 604a extend from the base structure 602a. When the lash 600a is worn, the coupling members 604a may facilitate structural coupling or engagement with the natural eyelashes of the wearer and may be used in conjunction with an adhesive or bonding agent to affix the lash 600a to the natural lash of the wearer. As described previously, the coupling members 604a may increase the surface area for the adhesive or bonding agent and also creates an interleaved structure with the natural eyelashes, which may improve coupling or engagement of the lash 600a when worn increasing the serviceable life of the lash and assisting with retention during extended use.

FIG. 6B depicts another example lash 600b having artificial lash hairs 606b that extend outwardly from a base structure 602b. Similar to as described previously, the lash hairs 606b may be integrally formed with the base structure 602b as part of a molding or printing process. Also similar to as described previously, the lash 600b may include coupling members 604b that extend outwardly from the base structure 602b. The base structure 602b, the lash hairs 606b and the coupling members 604b may define a monolithic eyelash or eyelash segment, similar to other examples described herein.

The coupling members 604b are configured to structurally engage a set of natural lashes of a wearer of the lash 600b. In this particular example, the coupling member 604b is formed from an array of 11 elements that extend outward from the base structure 602b. Other implementations may have more or fewer elements. Each of the coupling members 604b is formed from a substantially cylindrical protrusion or element. The coupling members 604b may have a diameter or width that is substantially smaller than the base structure 602b, as shown, which may assist with the installation of the lash 600b by separating adjacent natural eyelashes of the wearer to help assure that each coupling member 604b is placed between a pair of natural eyelashes. In some cases, the coupling members 604b have a diameter or width that is substantially similar to a diameter or width of the artificial lash hairs 606b. Similar to as described previously, when the lash 600b is worn, the coupling members 604b may facilitate structural coupling or engagement with the natural eyelashes of the wearer and may be used in conjunction with an adhesive or bonding agent to affix the lash 600b to the natural lash of the wearer. As described previously, the coupling members 604b may increase the surface area for the adhesive or bonding agent and also creates an interleaved structure with the natural eyelashes, which may improve coupling or engagement of the lash 600b when worn increasing the serviceable life of the lash and assisting with retention during extended use.

FIG. 6C depicts another example lash 600c having artificial lash hairs 606c that extend outwardly from a base structure 602c. Similar to as described previously, the lash hairs 606c may be integrally formed with the base structure 602c as part of a molding or printing process. Also similar to as described previously, the lash 600c may include coupling members 604c that extend outwardly from the base structure 602c. The base structure 602c, the lash hairs 606c and the coupling members 604c may define a monolithic eyelash or eyelash segment, similar to other examples described herein.

Similar to the other examples, the coupling members 604c are configured to structurally engage a set of natural lashes of a wearer of the lash 600c. In this particular example, the coupling member 604c is formed from an array of 9 elements that extend outward from the base structure 602c. Other implementations may have more or fewer elements. Each of the coupling members 604c is formed from a pointed structure having a base that is substantially wider than a tip or point of the coupling member 604c. The coupling members 604c may have a substantially cylindrical base and a tapered or conical tip, as shown, which may assist with the installation of the lash 600c by separating adjacent natural eyelashes of the wearer to help assure that each coupling member 604c is placed between a pair of natural eyelashes. The thicker base may also provide increased rigidity and structural support to the coupling members 604c at the location where the coupling members 604c extend from the base structure 602c. When the lash 600c is worn, the coupling members 604c may facilitate structural coupling or engagement with the natural eyelashes of the wearer and may be used in conjunction with an adhesive or bonding agent to affix the lash 600c to the natural lash of the wearer. As described previously, the coupling members 604c may increase the surface area for the adhesive or bonding agent and also creates an interleaved structure with the natural eyelashes, which may improve coupling or engagement of the lash 600c when worn, increasing the serviceable life of the lash and assisting with retention during extended use.

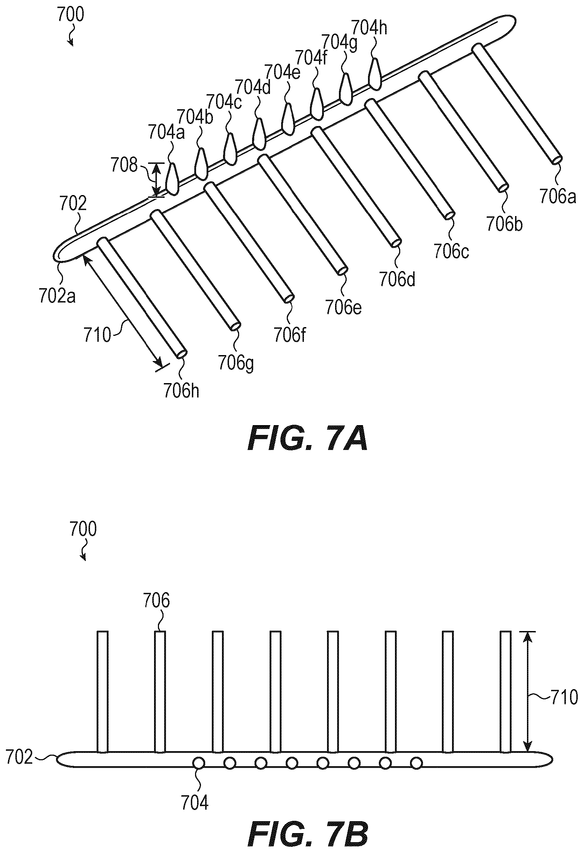

In some embodiments, an artificial lash system may leverage 3D printing and other molding processes to form a support frame from which different pre-formed artificial eyelash assemblies may be coupled to. This system may increase the volume of an artificial eyelash segment and/or change the style of an artificial eyelash segment using a common support frame, thereby simplifying the manufacturing process while providing the end-consumer more options. FIGs. 7A-13 depict examples of the artificial lash system including a support frame.

As described herein, pre-formed artificial eyelash assemblies may include eyelash fans (e.g., premade fans, promade fans), eyelash clusters, individual artificial hairs, or other grouping of artificial eyelashes. In some cases, the eyelash assemblies may be eyelash fans having a base portion or base portion defined from a proximate end of the artificial hairs, where the artificial hairs are unbonded with respect to each other (e.g., in an as-shipped condition), thereby allowing the individual hairs to independently wrap or couple to the support frame. These artificial eyelash assemblies may be coupled to engagement posts of the support frame to define a custom artificial eyelash segment system.

FIGs. 7A-7B depict an example support frame which may be configured to engage with a wearer's natural eyelashes and couple to and/or support discretized eyelash assemblies. FIG. 7A is a perspective view of a support frame 700. The support frame 700 may include a spine 702. Generally, the spine 702 may define an elongate body and is configured to support various coupling members, engagement features, and the like. The elongate body of the spine 702 may define a flat surface 702a from which engagement features, like engagement features 706a-h protrude. In some cases, the flat surface 702a may be configured to increase the comfort of the artificial eyelash system to the wearer. In some examples, the surface that interfaces with the wearer's natural lash may be larger to increase a surface area that contacts the natural lash-and thereby improves adhesion.

As depicted in FIG. 7A, the support frame may include an array of coupling members 704a-h. The array of coupling members 704a-h may correspond to the array of coupling members discussed in FIGs. 1A-1C, 2A-2F, 5A-5D, and 6A-6C. For example, the dimensions, shape, number, orientation, and location may correspond to any arrangement shown in the above figures. As depicted, the array of coupling members 704a-h may extend from the spine in a first direction. In some embodiments, the first direction may be transversal and/or perpendicular to an axis of the spine. The direction of the array of coupling members 704a-h are configured such that, in a worn or installed configuration, each coupling member extends substantially transversally with respect to the longitudinal direction of the natural lashes. For example, each coupling member extends through the gaps or interstices of the wearer's natural lashes, thereby increasing the available surface area for adhering the support frame to the natural lashes. In some cases, the array of coupling members acts as a "comb" between the natural lashes and may poke out through the top of the natural lashes when applied. As discussed in FIGs. 1A-1C, 2A-2F, 5A-5D, and 6A-6C, the coupling members may be substantially cylindrical, tapered, pyramidal, and/or may include coupling features such as hooks. In some cases, a spacing between the coupling members may be such that one, two, or three eyelashes fit between the spacing thereby securing the support frame to the eyelashes.

The support frame 700 may include an array of engagement posts 706a-h. The engagement posts 706a-h are configured for coupling a respective artificial eyelash assembly (e.g., act as a support for the artificial eyelash assembly). Each artificial eyelash assembly adds volume to the artificial eyelash system and may occlude the engagement posts 706a-h once bonded to the engagement posts 706a-h. Generally, each engagement post 706a-h extends from the spine in a second direction. In some examples, the second direction is different from the first direction. In some cases, the array of engagement posts 706a-h defines an angle between 60 degrees and 160 degrees with respect to the array of coupling members.

FIG. 7B depicts a top view of the support frame 700 from FIG. 7A. As depicted, the array of engagement posts 706 may be evenly distributed along the spine 702. The spine 702 may define a spline, a straight shape, a concave shape, a convex shape, or a flat shape configured to adapt to a portion adjacent or at the wearer's natural lash line. For example, the spine 702 can have a length ranging from 5 mm to 20 mm, 5 mm to 8 mm, 8 mm to 20 mm, 10 mm to 12 mm, 7 mm to 14 mm, 5 mm to 16 mm, or 5 mm to 25 mm.

In some cases the support frame may be referred to as a base for an artificial lash segment. For example 5 to 20 support frames (with coupled artificial lash assemblies, such as eyelash fans, eyelash clusters, or the like) may be positioned along the lash line to create a full voluminous look. In some cases, a single support frame may cover the lash line of the wearer.

In some examples, the engagement posts 706 may have a separation between adjacent engagement posts of between 0.3 mm and 1 mm, 0.5 mm and 2 mm, 1 mm to 2 mm, or 0.5 mm to 3 mm. In some examples (e.g., where the artificial eyelash system is for a segment lash applied under or over the lash line), the support frame may include 5 to 10 posts, 5 to 15 posts, 10 to 15 posts, 10 to 20 posts, or 5 to 30 posts. In some examples, the engagement posts 706 are elongate members, such as a cylinder, a pyramid, a cone, a tapered body, or the like. These engagement posts 706 may have a diameter between 0.01 mm and 0.03 mm, between 0.02 mm and 0.2 mm, between 0.02 mm and 0.3 mm, between 0.02 mm and 0.1 mm, or between 0.01 mm and 0.5 mm. In some cases, the array of engagement posts 706 may define a post height 710. The post height 710 may be between 1 mm to 2 mm, 1 mm to 3 mm, 1 mm to 4 mm, 1 mm to 5 mm, 1 mm to 7 mm, 0.5 mm to 6 mm, 2 mm to 5 mm, or 2 mm to 7 mm.

By contrast, the coupling members 704 may have a diameter of between 0.02 mm and 0.05 mm, between 0.02 mm and 0.25 mm, between 0.02 mm and 0.3 mm. Similarly, the height 708 of the coupling members may be between 0.02 mm and 0.05 mm, between 0.02 mm and 0.25 mm, between 0.02 mm and 0.3 mm, 0.02 mm and 1 mm, or 0.05 mm and 2 mm. Generally, the height 708 is less than the post height 710. In some cases, the height 708 is less than the post height 710 by a factor of 1.1, 1.5, 2, 3, or 10.

As discussed above, the spine, the coupling members, and the engagement posts may be a unitary or monolithic piece formed from a common material, such as a thermoplastic polymer. For example, the support frame may be formed using a three-dimensional printing process or a microscale additive manufacturing process (e.g., microstereolithography, projection microstereolithography, two-photon polymerization, electrochemical deposition, or the like). As discussed above, the manufacturing process may include a vat polymerization process, an injection molding process, a low injection pressure molding process, or the like.

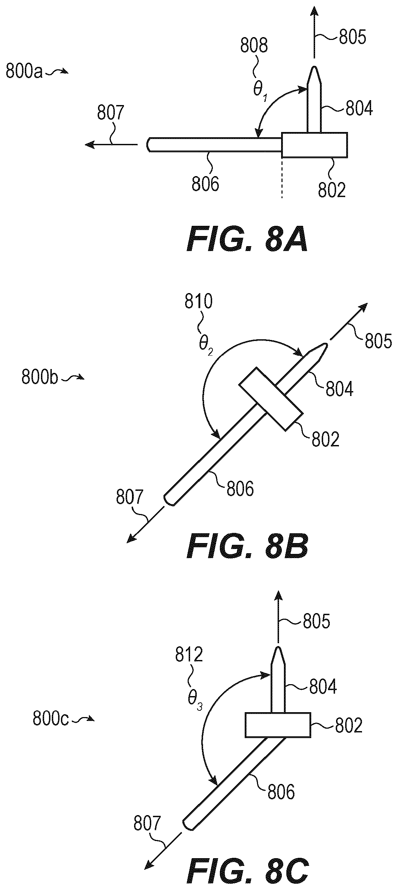

FIGs. 8A-8C depict side views of the coupling members 704 with respect to the engagement posts 706 from FIGs. 7A and 7B. FIG. 8A depicts a configuration 800a of the coupling members with respect to the engagement posts. As depicted, a coupling member 804 extends from the spine 802 in a first direction 805. In this example, the first direction 805 is perpendicular to the spine 802. Similarly, the engagement post 806 extends from the spine 802 in a second direction 807. The first direction 805 (e.g., corresponding to a longitudinal axis of the coupling member 804) and the second direction 807 (e.g., corresponding to a longitudinal axis of the engagement post 806) may define an angle 808. Angle 808 may be 90 degrees, or about 90 degrees. For example, in this view, the engagement post 806 and the coupling member 804 may be perpendicular to each other.

FIG. 8B depicts a configuration 800b where the first direction 805 (corresponding to the longitudinal axis of the coupling member 804) and the second direction 807 (corresponding to the longitudinal axis of the engagement post 806) define an angle 810. Angle 810 may be a 180 degree angle or about 180 degrees. In this case, the spine 802 may be configured to diagonally interface with a natural lash line of the wearer. Similarly, the coupling members 804 may extend between the natural lashes of the wearer in an oblique direction. As described herein, oblique refers to a non-zero and non-perpendicular angle. In some cases, the coupling members 804 may extend between the natural lashes in a substantially transverse direction.

FIG. 8C depicts a configuration 800c where the first direction 805 and the second direction 807 are at an angle 812. Angle 812 is an oblique angle. Non-limiting examples of the oblique angle may be 30 degrees, 60 degrees, 80 degrees, 100 degrees, 120 degrees, 140 degrees, 160 degrees, or 170 degrees. In some embodiments, the oblique angle 812 is between 60 degrees and 160 degrees.

More generally, the coupling members and the engagement posts may define respective longitudinal axes which facilitate the placement of the artificial eyelash system on the wearer's lash. For example, the coupling members may be configured to extend upwards towards the natural lash (e.g., extend between the natural lash hairs in a substantially perpendicular direction, like a comb) while the engagement posts are configured to follow a general direction of the natural lashes. In some cases, the coupling members and the engagement posts define an elbow or an "L" shape with respect to each other (e.g., viewed from a side). In some embodiments, the engagement posts may be inclined with respect to the coupling members.

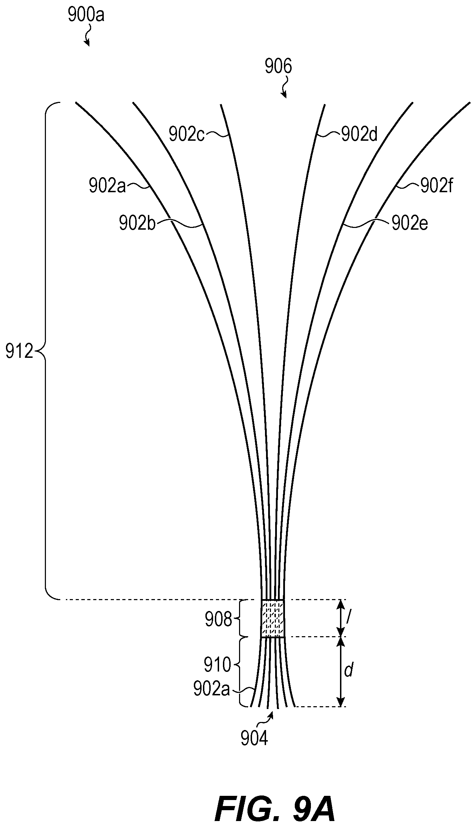

Each engagement post of the array of engagement posts may be configured such that different artificial eyelash assemblies can be coupled to each individual engagement post. An artificial eyelash assembly may be an eyelash fan, an artificial lash cluster, hand-applied individual artificial hairs, or artificial lash bundles. Each artificial eyelash assembly may be configured to couple to a single engagement post. FIGs. 9A-9D describe various examples of artificial eyelash assemblies which may couple to a respective engagement post. Generally, commercially-available artificial eyelash assemblies that are used to attach to an individual natural lash hair and/or to a group of natural lash hairs may be used to couple to the engagement post.

FIG. 9A shows a top view of an example artificial eyelash assembly 900a. The artificial eyelash assembly 900a may include a plurality of artificial hairs, such as artificial hairs 902a-f. In this example shown, the artificial eyelash assembly 900a has six artificial hairs (e.g., a 6D eyelash fan). In some examples of the artificial eyelash assembly 900a, the artificial eyelash assembly 900a may have anywhere from three artificial hairs (e.g., 3D) up to twenty artificial hairs (e.g., 20D). In some cases, the artificial eyelash assembly 900a may have as many as 36 artificial hairs (e.g.,36D). The 6D fan shown is meant for illustrative purpose and it is not limiting to a particular number of artificial hairs.

In some embodiments, the artificial hairs may be made from a polymer like a polybutylene terephthalate (PBT), a polyamide (e.g., nylon), polypropylene, polycarbonates, polyesters, or other polymer material. The artificial hairs may also be made from a thermoset polymer or other similar material. In some examples, other materials may be used that include other polymer-based, synthetic or composite materials. While the hairs are referred to herein as "artificial" they may include naturally occurring materials including animal hairs, natural fibers, natural colors, oils, or other natural materials. While the examples depicted herein may appear to have a uniform thickness, lashes may have a tapered thickness or non-uniform thicknesses.

The artificial eyelash assembly 900a may have a plurality of artificial hairs 902a-f having an elongate shape. The artificial eyelash assembly 900a defines a proximate end 904 and a distal end 906. The proximate end 904 may be used to refer to the end of the artificial eyelash assembly 900a which couples to or is configured to couple to an engagement post. The distal end 906 refers to the end of the artificial eyelash assembly 900a, opposite the proximate end, where the artificial hairs are splayed out by the most distance. Put differently, the artificial hairs 902a-f diverge away from the proximate end and the artificial eyelash assembly 900a is at its widest at the distal end. The distal end 906 may be the end most visible by others when the eyelash is applied. Each artificial hair 902a-f extends contiguously from the proximate end 904 to the distal end 906.

The eyelash fan may include a bonded portion 908, which may also be referred to as a coupling region, a bonding region, adhesion region, crystalized portion, bonding location, or adhesive location. The bonded portion 908 may be a portion of the artificial eyelash assembly 900a where the artificial hairs 902a-f are coupled to one another using an adhesive, a heat bonding process, a coupling member or other technique used to bind or couple the hairs.

The bonded portion may include an adhesive composition that binds the artificial hairs 902a-f. The adhesive composition may be a cured adhesive which forms a solid yet flexible bond. For example, an adhesive composition may be applied in a liquid form and then cured to become solid. The adhesive composition may surround or at least partially encapsulate a portion of the artificial hairs and cures or solidifies to bond the artificial hairs 902a-f together. In some examples, the cured or solidified adhesive may be a crystalized material. In some embodiments, the adhesive composition is self-curing and does not require an application of heat to bond the artificial hairs together. In other examples, the adhesive composition may be powder coating, gel coating, or other types of adhesive. More generally, the adhesive refers to a permanent adhesive which keeps the artificial hairs 902a-f bonded together. Thus, during application, the artificial hairs 902a-f are handled as a unit (e.g., the artificial eyelash assembly 900a unit) and maintain its coupling during and after application. In some examples, the adhesive composition may be a cyanoacrylate. For example, the adhesive composition may be ethyl-cyanoacrylate, alkoxy-cyanoacrylate, butyl-cyanoacrylate, or methoxy-cyanoacrylate. In some cases, the adhesive may be an epoxy. Generally, the adhesive may be applied in a liquid or fluid state and solidify once cured.

In some examples, the artificial hairs 902a-f are coupled together via one or more melting processes. For example, the artificial hairs 902a-f may be melted or partially melted to bond to each other at the bonded portion 908 while leaving the hairs at a base region or base portion 910 unbonded. In some cases, the base portion 910 may be referred to as a base region, due to the hairs at this region being free with respect to each other in an as-shipped condition (e.g., prior to coupling it to an end structure, such as an engagement post of a frame structure or an individual lash hair). For example, the artificial hairs 902a-f may be partially fused together by applying heat to the bonded portion 908. In some cases, the artificial hairs 902a-f may be pinched together to ensure coupling to each other. In some cases, a fusible thread, melted composite, or other binding material may be employed to bond the hairs together without requiring melting of the artificial hairs 902a-f. A heat-activated adhesive or other bonding agent may also be used alone or in combination with any of the coupling techniques described herein. In some cases, the artificial hairs 902a-f may be coupled together via a physical wrapping method. For example, a thread, film, band, shrink wrap, or other coupling member may be used to couple the artificial hairs at the bonded portion 908.

In other examples, the artificial eyelash assembly 900a may be formed as a monolithic piece. For example, a three-dimensional printing process (e.g., micro 3D printing, microstereolithography, projection microstereolithography, two-photon polymerization, electrochemical deposition, or the like) may be used. In this process, the artificial eyelash assembly 900a may be formed in layers, in the order of nanometers or millimeters. A vat polymerization process, where a vat with photopolymer resin is used and a UV light cures the resin in layers may be used. In this configuration, the coupled region may be formed from the same material as the artificial hairs. As described above, the artificial hairs in the base portion 910 may be unbonded with respect to each other, allowing the hair to wrap at least partially around the engagement post of the support frame, such as the support frame described in FIGs. 7A and 7B. Due to the 3D printing process, a cross-section of the artificial eyelash assembly 900a may be U-shaped, circular, flat, or the like to couple more seamlessly to the engagement post or to a natural lash.

In some cases, the bonded portion 908 may have a length (l) measured along the length of the artificial hairs 902a-f. In some cases, the bonded portion 908 is disposed over a small fraction of the lengths of the hair to reduce the added weight of the eyelash fan (e.g., from the adhesive composition or other bonding element). While use of an adhesive is described with respect to this and other examples provided herein, other bonding or coupling techniques may be used in combination with the adhesive or instead of the adhesive. In some examples, the bonded portion 908 is approximately 1 mm. More generally, the bonded portion 908 is between 0.5 mm and 10 mm, between 1 mm and 8 mm, between 1 mm and 6 mm, between 1 mm and 5 mm, between 1 mm and 4 mm, and/or between 1 mm and 3 mm.

An edge of the bonded portion 908 may be positioned a distance "d" from the proximate end 904. In some embodiments, the distance "d" may be 0.5 mm, 1 mm, 1.5 mm, 2 mm, 3 mm, or 4 mm, for example. In some examples, the distance "d" may range from 0.5-5 mm, 0.5-4 mm, 0.5-3 mm, 0.5-2 mm, 1-5 mm, 1-4 mm, 1-3 mm, and/or 1-2 mm. In some examples, a length of the bonded portion 908 is less than a distance d and/or a length of a base portion 910. For example, the ratio between the length of the bonded portion 908 and the length of the base portion may be 1/3, 1/2, 1/4, and the like. In some examples, the ratio between the length of the coupling region 908 and the length of the base portion 910 may be 4:1, 3:1, 2:1, and the like.

In some non-limiting examples, the total length of each artificial hair may range from 5 mm to 25 mm, 10 mm to 30 mm, 12 mm to 15 mm, 8 mm to 9 mm, 10 mm to 12 mm, or 13 mm to 14 mm. Accordingly, the fan region of the artificial eyelash assembly may be longer than the base portion and the bonded portion, combined. In some cases, the ratio of the total length of the artificial hair to the base portion is in the order of 15, 10, 8, 6, 5, 3, or 2, as non-limiting examples.

The artificial eyelash assembly 900a may include a base portion 910. The region 910 may be a span (having the distance d) of artificial hairs 902a f from the proximate end 904 to the bonded portion 908. At the base portion 910, the artificial hairs 902a-f are unconstrained and/or unbonded with respect to each other as assembled and prior to applying additional adhesives to couple the artificial eyelash assembly 900a to the engagement post. In the base portion 910, each of the artificial hairs 902a-f are unconstrained at the proximate end 904 (and thus free to bend and/or move with respect to each other at this end).

The hairs at the base portion may be free to move with respect to each other to allow the hairs to wrap at least partially around a wearer's or user's natural lash or around an engagement feature from a support frame to improve the coupling of the artificial hairs with the wearer's natural lash. In some cases, the shipped eyelash fans may be placed over an adhesive strip which is removed prior to application.

The artificial eyelash assembly 900a may also include a flared region 912. At the flared region 912, each of the artificial hairs 902a-f may progressively splay outward from the bonded portion 908 towards the distal end 906. In this configuration, a width of the artificial eyelash assembly 900a may be at its widest at the distal end 906. Generally, at the flared region 912, the artificial hairs 902a-f are also free from the adhesive composition or other bonding agent from the bonded portion 908.

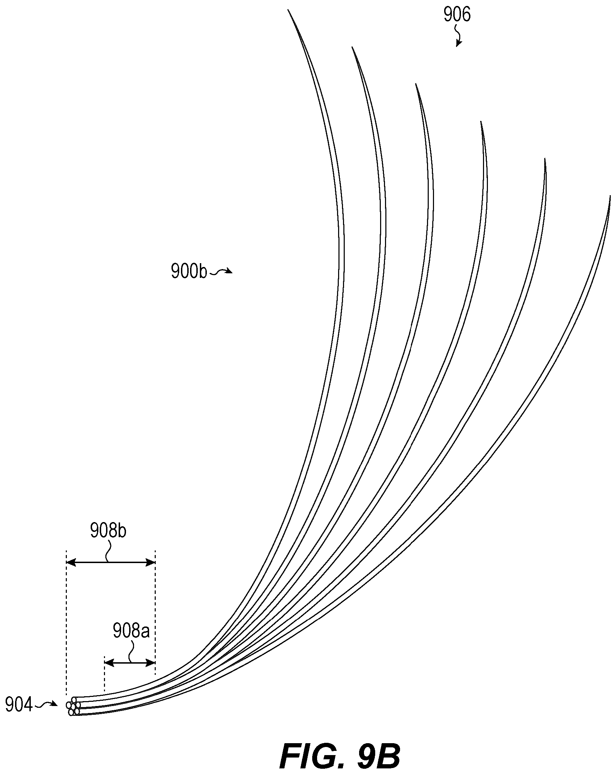

FIG. 9B shows a perspective view of an example artificial eyelash assembly 900b. This example assembly 900b may include six artificial hairs bonded by an adhesive composition (e.g., such as a cyanoacrylate). The depicted artificial eyelash assembly 900b may include a bonded portion 908a that is between the proximate end 904 and the distal end 906 but does not extend to the proximate end 904 (e.g., leaving the plurality of hairs at this portion unbonded). In some cases, the bonded portion 908b may extend up to the proximate end 904.

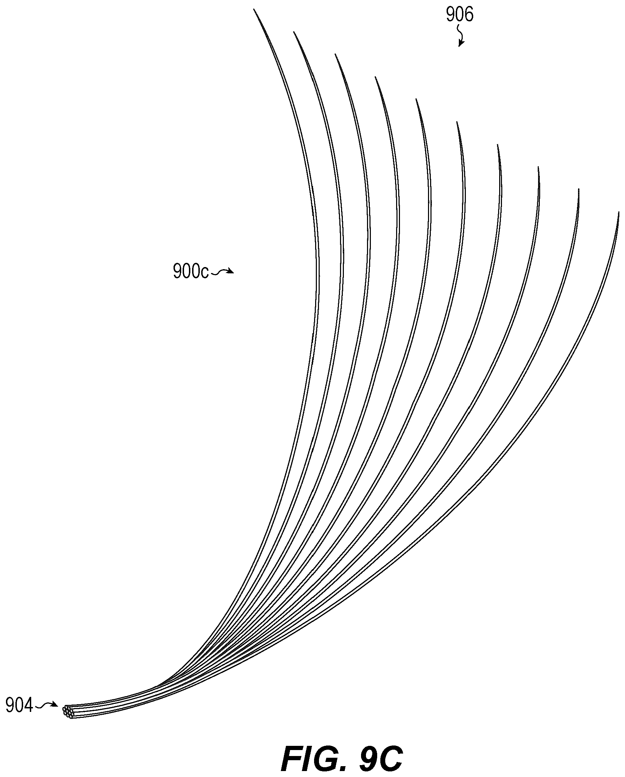

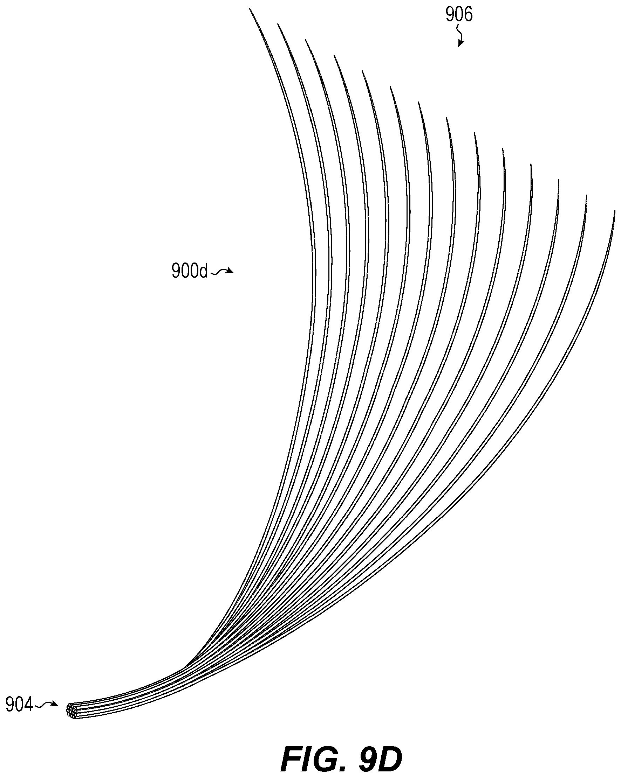

FIG. 9C shows a perspective view of another example artificial eyelash assembly 900c. In this example, the artificial eyelash assembly 900c may include 10 artificial hairs bundled together at a location adjacent to or at the proximate end 904. A bonded portion of the artificial eyelash assembly 900c may be similar to a bonded portion of the eyelash assemblies 900a or 900b. FIG. 9D shows a perspective view of another example artificial eyelash assembly 900d which may include fourteen artificial hairs and may have a similar configuration (e.g., in terms of the bonded portion) as assemblies 900a-c. More generally, an artificial eyelash assembly may have approximately 3 hairs to 36 hairs. In some examples the plurality of artificial hairs may range between three and twenty artificial hairs. In some embodiments, the artificial eyelash assembly is bonded (e.g., at the bonded portion) prior to coupling to an engagement post, via a different adhesive composition.

In some cases, the artificial eyelash assembly may define a circular cross-section at the base portion, a half-moon or "U" shaped cross section, a flat cross-section, or the like. In some cases, distribution of the artificial hairs defining the cross-section may promote each artificial hair wrapping around the end structure (e.g., an engagement post, a natural lash).

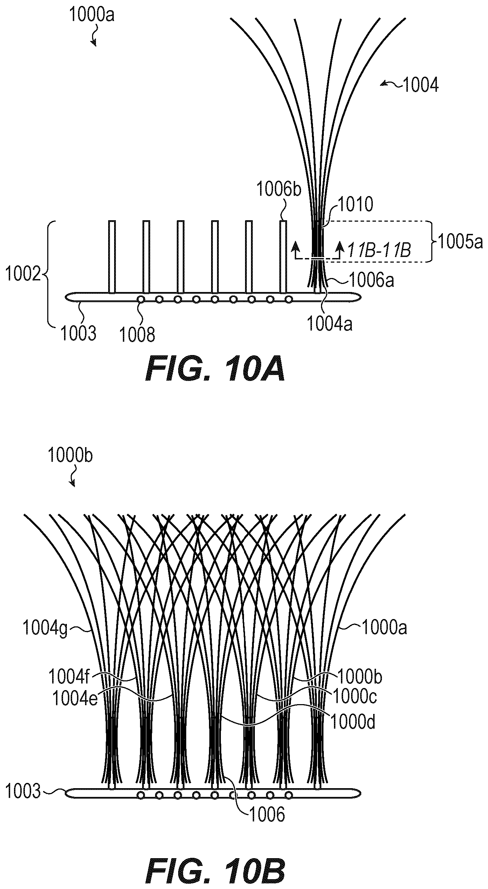

FIG. 10A shows a partially-assembled artificial eyelash system 1000a. As depicted, the artificial eyelash system 1000a may include a support frame 1002, which may correspond to the support frame from FIGs. 7A-7B (described above) or to a support frame, such as a support frame described in FIG. 14, below. In the example shown in FIG. 10A, the support frame 1002 includes an array of engagement posts, such as engagement posts 1006a and 1006b, and an array of coupling members 1008. The engagement posts 1006 are configured to receive and/or to support an artificial eyelash assembly 1004, which may correspond to one of the artificial eyelash assemblies described in FIGs. 9A-9D.

The artificial eyelash assembly 1004 is configured to be positioned lengthwise along the engagement post 1006a. More specifically, the proximate end 1004a of the artificial eyelash assembly 1004, along with the bonded portion of the artificial eyelash assembly 1004, is coupled to the engagement post 1006a via an adhesive composition 1010. In some cases, the proximate end 1004a of the artificial eyelash assembly 1004 does not contact the spine 1003. In some embodiments, the proximate end 1004a may contact the spine 1003 yet a substantial portion of the surface area of the artificial eyelash assembly 1004 that couples to the support frame 1002 is via the engagement posts. Generally, in a coupled configuration, the artificial eyelash assembly 1004 occludes the engagement post 1006a from view. Accordingly, a wearer of the eyelash system may create voluminous looks, such as those in manually-applied eyelash fans, in less time.

As assembled, the length of the artificial eyelash assembly 1004 may be longer than the length of the engagement post 1006a. For example, the eyelash assembly 1004 may be 10 to 70 percent, 20 to 80 percent, 30 to 70 percent, 50 to 80 percent longer than the engagement post.

In some cases, the adhesive composition 1010 is applied to the artificial eyelash assembly 1004 at its proximate end 1004a. The artificial eyelash assembly 1004 is then positioned over the engagement post 1006a. In some examples, the adhesive composition 1010 may be a UV-cured adhesive, such as a UV-cured epoxy and/or a UV-cured acrylate, and/or a light-curable acrylate-based formulation. In some cases, the UV-cured adhesive may have a curing time between 0.5 and 15 seconds, 0.2 and 30 seconds, or 1 to 20 seconds.

To assemble the artificial eyelash system, each artificial eyelash assembly is formed first. For example, a first manufacturing step may involve obtaining the plurality of artificial hairs and bonding each respective plurality of artificial hairs using an adhesive composition, such as a cyanoacrylate, described above. Once a curing period for the cyanoacrylate elapses (e.g., between 8 and 24 hours, or less), the artificial eyelash assembly may be rolled and/or baked to form a curl (e.g., a C curl, a D curl) for each artificial hair of the plurality of hairs. The artificial eyelash assemblies may be packaged and/or shipped without the support frame, in some cases. Each artificial eyelash assembly is then coupled to a respective post using a different adhesive composition, such as the UV-cured adhesive. The UV-cured adhesive may be applied to portions of the artificial eyelash assembly which include the already-bonded and solidified adhesive composition that bonded the plurality of artificial hairs together. For example, subsequent to the adhesive of the bonded portion being cured, the proximate end of the plurality of hairs may remain free of the UV-cured adhesive and the adhesive of the bonded portion may be cured prior to the UV-curing adhesive bonding the proximate end of the plurality of hairs to the engagement post.

In some embodiments, a curing time of the adhesive composition which adheres the plurality of hairs to form each artificial eyelash assembly may be longer than the curing time of the adhesive composition which adheres the artificial eyelash assembly to each engagement post. For example, a difference may be in the order of hours to seconds, depending on the adhesive used. In other examples, the same adhesive composition may be used for both steps of the assembly and/or manufacturing process.

FIG. 10B shows an assembled artificial eyelash system 1000b. As depicted, each artificial eyelash assembly 1004a-g is coupled to a respective engagement post. In some examples, the artificial eyelash assemblies 1004a-g are not coupled directly to each other. In some cases, depending on the separation of the engagement posts and the extent of the artificial eyelash assemblies at the distal end, one or more artificial hairs from different eyelash assemblies may intersect to create a more natural and voluminous look. The plurality of eyelash assemblies 1004a-g may be coupled to the array of engagement posts 1006 prior to applying the system to the wearer's lashes. In this configuration, the system may be pre-bonded and pre-assembled prior to applying to the wearer's lashes for faster application of the artificial eyelash system (e.g., the assembled segment).

In some embodiments, the engagement posts are equidistantly spaced with respect to each adjacent engagement post. In some cases, a respective engagement post at each end may be at a smaller distance from the edge of the spine than a distance from the next adjacent post. In some cases, this distance is smaller by a factor of 2, a factor of 3, or a factor of 5. The spacing in this case is configured such that an adjacent artificial eyelash segment, such as 1000b, may abut to another eyelash segment such that the engagement posts at the ends appear equidistantly spaced along different artificial eyelash segments. In some cases, the engagement posts at the ends of abutting artificial eyelash segments may be closer together than the spacing of engagement posts to occlude an edge of each artificial eyelash segment system. In some cases, the edge of the spine 1003 may have mating features, such as corresponding serrated edges, diagonal edges, or the like, to facilitate alignment between artificial eyelash segments.

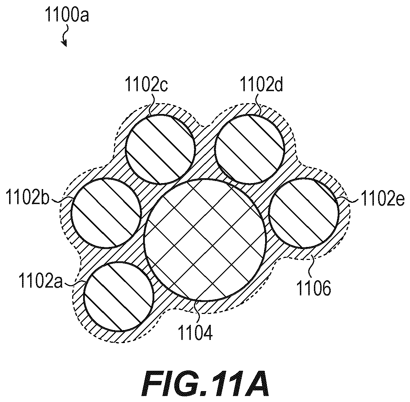

As discussed above, in some examples, the artificial eyelash assembly may include a base portion positioned between the proximate end and the bonded portion of the assembly (e.g., along a length of the plurality of artificial hairs). The segments of artificial hairs in the base portion may be configured to wrap, at least partially, around a coupling area, such as an area defined by the engagement post or a natural lash. FIGs. 11A-11C depict examples of the artificial eyelash assembly wrapping around a respective engagement post.

FIG. 11A shows a cross-sectional view of a 5D artificial eyelash assembly 1100a along the base portion of the 5D artificial eyelash assembly 1100a. As depicted, the plurality of artificial hairs 1102a-e wraps around the engagement post 1104. For example, a portion of each artificial hair 1102a-e is bonded to the engagement post 1104 via an adhesive 1106 (e.g., a UV-cured adhesive, as discussed above). Because, prior to applying the UV-cured adhesives, the base portion of the 5D artificial assembly is not bonded to each other, the artificial hairs are free to move and wrap around the engagement post, as shown. This, in turn, increases the adhesion surface area between the artificial eyelash assembly and the engagement post, thereby improving the bond between the two pieces. As discussed herein, wrapping may refer to the artificial hairs at least partially covering the circumference or outside surface area of the engagement post.

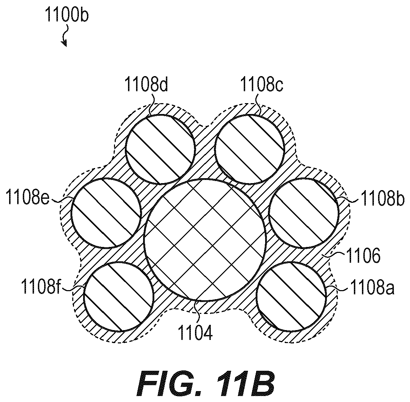

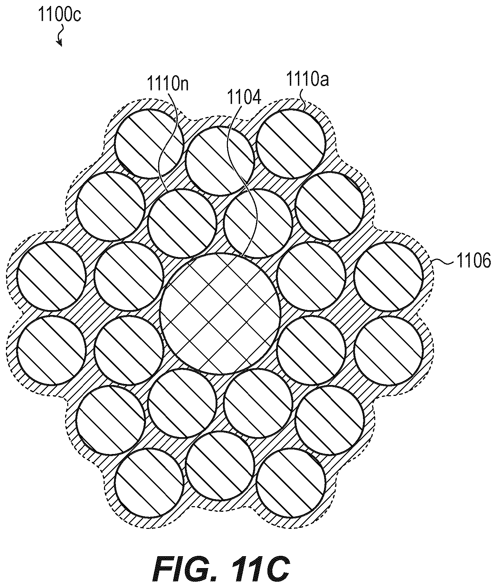

Similarly, FIG. 11B shows an example of the base portion of a 6D artificial eyelash assembly 1100b. As depicted, the plurality of artificial hairs 1108a-f wrap around the engagement post. More specifically, each of the artificial hairs 1108a-f contacts a portion of the engagement post 1104 (e.g., with the adhesive 1106 interface) to increase the adhered surface area between the artificial eyelash assembly and the engagement post. In FIG. 11C, a 22D artificial eyelash assembly is shown. In this example, due to the number of artificial hairs 1110a-n, the artificial hairs wrap around the engagement post 1104 and around each other (e.g., each artificial hair may overlap with other artificial hairs).

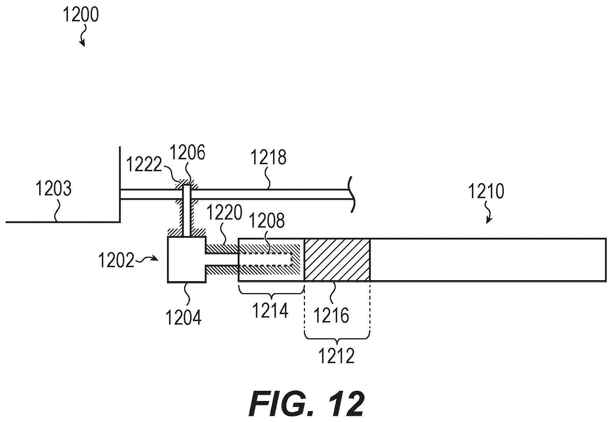

FIG. 12 shows a simplified diagram of the artificial lash system 1200 positioned under a wearer's natural lash (e.g., an elevation view of the engagement post / eyelash assembly / and natural lash interface). In particular, the support frame 1202 may be positioned adjacent to the lash line 1203 of a wearer, such that the spine 1204 is positioned along the length of the lash line 1203. The artificial lash system 1200 may include three different adhesives applied at different steps of the manufacturing and/or assembly process.

First, the system 1200 includes an eyelash assembly 1210, which may correspond to the eyelash assembly discussed in FIGs. 9A-9D. The eyelash assembly 1210 includes a plurality of artificial hairs bonded together at a bonded portion 1212 using an adhesive 1216. As discussed above, the adhesive may be a heat-activated adhesive, a cyanoacrylate (e.g., such as an ethyl cyanoacrylate), or other suitable adhesive configured to permanently bond the plurality of artificial hairs together. Adhesive 1216 may be a cured adhesive that solidifies, generating a flexible and strong bond.

Next, the eyelash assembly 1210 is coupled to an engagement post 1208. Generally, the eyelash assembly 1210 is coupled to the engagement post at the base portion 1214. In some embodiments, both the base portion 1214 and the bonded portion 1212 may be coupled to the engagement post 1208. The engagement post 1208 and the eyelash assembly 1210 may be coupled using an adhesive 1220. As discussed above, adhesive 1220 may be a fast curing adhesive, such as a UV-cured adhesive. In some cases, cyanoacrylates, heat-cured, or quick-cured epoxy glues may be used.

Once each eyelash assembly 1210 is coupled to each respective engagement post 1208, the system may be applied or installed to a wearer's natural lashes. The coupling member 1206 of the support frame 1202 and a portion of the spine 1204 may be coupled to the wearer's natural lash 1218. For example, the artificial eyelash system may be positioned under the natural lash 1218, such that the coupling member 1206 pokes upwards between the natural lashes to engage the artificial eyelash system. Prior to applying the eyelash system, an adhesive 1222 may be applied to the coupling members 1206 and the spine 1204. Alternatively, the adhesive 1222 may be applied to the natural lashes 1218 (e.g., via a mascara-like applicator). The adhesive 1222 may be an eye-safe adhesive, such as an ethyl-cyanoacrylate based adhesive, or other lash-safe glues.

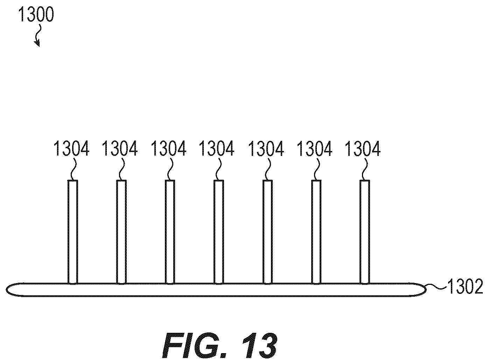

FIG. 13 depicts a top view of support frame 1300, which may include a spine 1302 and engagement posts 1304, and which may not include the coupling members, such as coupling members shown in FIGs. 7A and 7B. In this example, the engagement posts 1304 may be configured to couple to a respective artificial eyelash assembly. The spine 1302 is configured to be coupled to the wearer's natural eyelash. In some cases, the spine 1302 may include a textured surface to couple to the natural eyelashes.

As used herein, the phrase "at least one of" preceding a series of items, with the term "and" or "or" to separate any of the items, modifies the list as a whole, rather than each member of the list. The phrase "at least one of" does not require selection of at least one of each item listed; rather, the phrase allows a meaning that includes at a minimum one of any of the items, and/or at a minimum one of any combination of the items, and/or at a minimum one of each of the items. By way of example, the phrases "at least one of A, B, and C" or "at least one of A, B, or C" each refer to only A, only B, or only C; any combination of A, B, and C; and/or one or more of each of A, B, and C. Similarly, it may be appreciated that an order of elements presented for a conjunctive or disjunctive list provided herein should not be construed as limiting the disclosure to only that order provided.

One may appreciate that although many embodiments are disclosed above, that the operations and steps presented with respect to methods and techniques described herein are meant as exemplary and accordingly are not exhaustive. One may further appreciate that alternate step order or fewer or additional operations may be required or desired for particular embodiments.

Although the disclosure above is described in terms of various exemplary embodiments and implementations, it should be understood that the various features, aspects and functionality described in one or more of the individual embodiments are not limited in their applicability to the particular embodiment with which they are described, but instead can be applied, alone or in various combinations, to one or more of the embodiments of the invention, whether or not such embodiments are described and whether or not such features are presented as being a part of a described embodiment. Thus, the breadth and scope of the present invention should not be limited by any of the above-described exemplary embodiments but is instead defined by the claims herein presented.

### ADDITIONAL NUMBERED STATEMENTS

1. An artificial eyelash system comprising:
   a support frame comprising:
      a spine defining an elongate body;
      an array of coupling members extending from the spine in a first direction, the array of coupling members configured to extend between the natural lashes of a wearer in a substantially transversal direction with respect to the natural lashes;
      an array of engagement posts extending from the spine in a second direction, wherein an angle between the first direction and the second direction is between 60 degrees and 160 degrees;
   an artificial eyelash assembly coupled to a particular engagement post of the array of engagement posts, the artificial eyelash assembly comprising a plurality of artificials hairs having a proximate end and a distal end; and
   a first adhesive composition bonding the proximate end of the plurality of artificial hairs of the artificial eyelash assembly to the particular engagement post; wherein the array of coupling members of the support frame is configured to be coupled to the natural lashes of the wearer using a second adhesive composition.
2. The artificial eyelash system of statement 1, wherein:
   the artificial eyelash assembly comprises a bonded portion comprising a third adhesive composition bonding the plurality of artificial hairs to each other at a location between the proximate end and the distal end;
   subsequent to the third adhesive composition of the bonded portion being cured, the proximate end of the plurality of artificial hairs remains substantially free of the third adhesive composition; and
   the third adhesive composition of the bonded portion is cured prior to the first adhesive composition bonding the proximate end of the plurality of hairs to the particular engagement post.
3. The artificial eyelash system of statement 2, wherein:
   a portion of the plurality of artificial hairs between the bonded portion and the proximate end are configured to at least partially wrap around the particular engagement post.
4. The artificial eyelash system of statement 1, wherein:
   the plurality of artificial hairs includes between three to twenty artificial hairs; and
   the plurality of engagement posts includes between five to fifteen engagement posts.
5. The artificial eyelash system of statement 1, wherein:
   the first adhesive composition is different from the second adhesive composition; and
   a curing time of the first adhesive composition is less than a curing time for the second adhesive composition.
6. The artificial eyelash system of statement 1, wherein:
   a respective diameter of each engagement post of the plurality of engagement posts is between 0.02 mm and 0.2 mm; and
   a respective length of each engagement post of the plurality of engagement posts is between 1 mm and 5 mm.
7. The artificial eyelash system of statement 1, wherein the angle between the first direction and the second direction is 90 degrees.
8. An artificial eyelash segment comprising:
   a support frame comprising:
      a spine having a length that defines a length of the artificial eyelash segment;
      an array of engagement posts, each engagement post of the array of engagement posts protruding perpendicularly from the length of the spine;
   a plurality of artificial eyelash assemblies, each artificial eyelash assembly of the plurality of artificial eyelash assemblies defining:
      a bonded portion coupling a plurality of artificial hairs of a respective artificial eyelash assembly to each other, the bonded portion positioned between a proximate end and a distal end of the respective artificial eyelash assembly; and
      a base portion between the proximate end and the bonded portion, the plurality of artificial hairs in the base portion wrapped at least partially around a respective engagement post of the array of engagement posts; and
   a UV-cured adhesive composition adhering each artificial eyelash assembly of the plurality of eyelash assemblies to a respective engagement post of the plurality of engagement posts.
9. The artificial eyelash segment of statement 8, wherein the support frame further comprises:
   an array of coupling members protruding from the spine, the array of coupling members defining an angle between 60 degrees and 160 degrees with respect to the array of engagement posts, the array of coupling members configured to be positioned crosswise with respect to a wearer's natural eyelash and at least partially extend through the interstices between adjacent natural eyelashes.
10. The artificial eyelash segment of statement 9, wherein the support frame is a unitary structure.
11. The artificial eyelash segment of statement 9, wherein:
   each coupling member of the array of coupling members is separated by a first separation distance with respect to an adjacent coupling member; and
   each engagement post of the array of engagement posts is separated by a second separation distance with respect to an adjacent engagement post, the second separation distance larger than the first separation distance.
12. The artificial eyelash segment of statement 8, wherein a particular proximate end corresponding to a particular eyelash assembly is positioned at a distance with respect to the spine.
13. The artificial eyelash segment of statement 8, wherein:
   for each artificial eyelash assembly:
   the respective plurality of artificial hairs splay with respect to each adjacent artificial hair at the distal end; and
   the plurality of artificial hairs includes between three and twenty artificial hairs.
14. The artificial eyelash segment of statement 8, wherein:
   the support frame is formed from a first material comprising a thermoplastic polymer; and
   the plurality of artificial eyelash assemblies are formed from a second material different from the first material.
15. A support frame for an artificial eyelash segment, the support frame comprising:
   a spine defining a first length and a flat surface along the length;
   an array of engagement posts protruding from the flat surface, each engagement post of the array of engagement posts having a second length and configured to engage to respective artificial eyelash assemblies; and
   an array of coupling members protruding from a surface of the spine different from the flat surface, each coupling member from the array of coupling members defining a third length less than the first length, the array of coupling members configured to interlace with a wearer's natural eyelashes such that the array of coupling members are positioned crosswise with respect to the wearer's natural eyelashes in a worn configuration.
16. The support frame of statement 15, wherein:
   each engagement post of the array of engagement posts defines a substantially cylindrical profile having a first cross-sectional area; and
   each coupling member of the array of coupling members defines a respective second cross-sectional area that is less than the first cross-sectional area.
17. The support frame of statement 15, wherein the array of engagement posts defines a 90 degree angle with respect to the array of coupling members.
18. The support frame of statement 15, wherein the spine, the array of engagement posts, and the array of coupling members are a unitary member formed by a molding process.
19. The support frame of statement 15, wherein each coupling member of the array of coupling members define a separation distance between adjacent coupling members, the separation distance configured to receive no more than two natural eyelashes crosswise.
20. The support frame of statement 15, wherein the spine and the array of engagement posts are configured to be positioned under the wearer's natural eyelashes.
21. A monolithic eyelash segment comprising:
   a base structure defining an elongate body;
   a set of individual artificial lash hairs integrally formed with the base structure and extending outwardly from the elongate body along a first direction; and
   an array of coupling members integrally formed with the base structure extending outwardly from the elongate body in a second direction that is transverse to the first direction, the array of coupling members configured to structurally engage a set of natural lashes of a wearer to the monolithic eyelash segment.
22. The monolithic eyelash segment of statement 21, wherein:
   the base structure, the set of individual artificial lash hairs, and the array of coupling members are integrally formed using a three-dimensional printing process; and
   each coupling member of the array of coupling members are configured to extend upwards towards and between the set of natural lashes of the wearer.
23. The monolithic eyelash segment of statement 21, wherein each coupling member of the array of coupling members defines a respective first end and a second end, the second end curved towards the first end to at least partially define a hook shape.
24. The monolithic eyelash segment of statement 21, wherein a respective second end of a first coupling member from the array of coupling members is configured to at least partially wrap around a natural lash from the set of natural lashes.
25. The monolithic eyelash segment of statement 21, wherein each coupling member of the array of coupling members defines a respective protrusion configured to be positioned between adjacent natural lashes from the set of natural lashes.
26. The monolithic eyelash segment of statement 21, wherein the array of coupling members is arranged linearly along the elongate body.
27. The monolithic eyelash segment of statement 21, wherein the array of coupling members comprises at least thirty (30) coupling members.
28. A monolithic eyelash segment comprising:
   a base structure defining an elongate body;
   a set of individual artificial lash hairs integrally formed with the base structure and extending outwardly from the elongate body along a first direction; and
   a coupling member integrally formed with the base structure extending outwardly from the elongate body in a second direction different from the first direction, wherein:
      the first direction and the second direction define an angle less than 180 degrees;
      the base structure, the set of individual artificial lash hairs, and the coupling member is formed from a thermoplastic polymer material; and
      the base structure, the set of individual artificial lash hairs, and the coupling member are integrally formed without the use of adhesives.
29. The monolithic eyelash segment of statement 28, wherein:
   the set of individual artificial lash hairs comprises a first row of artificial lash hairs and a second row of artificial lash hairs; and
   the first row of artificial lash hairs and the second row of artificial lash hairs are vertically distributed with respect to the first direction at the base structure.
30. The monolithic eyelash segment of statement 28, wherein:
   the elongate body defines a first end and a second end; and
   at least one of the first end or the second end define a mating surface configured to align to another monolithic eyelash segment.
31. The monolithic eyelash segment of statement 30, wherein the mating surface defines a serrated surface configured to engage to an end of another monolithic eyelash segment.
32. The monolithic eyelash segment of statement 28, wherein:
   the coupling member is configured to extend between a wearer's natural lashes in an applied position.
33. The monolithic eyelash segment of statement 28, wherein the base structure is configured to be positioned under a wearer's natural lash.
34. The monolithic eyelash segment of statement 28, wherein the first direction is oblique with respect to a surface of the elongate body.
35. A monolithic eyelash segment comprising:
   a base structure defining a width of the monolithic eyelash segment;
   an array of artificial hairs extending from the base structure and distributed along the width of the monolithic eyelash segment, each artificial hair of the array of artificial hairs defining a respective curvature; and
   an array of coupling members extending from the base structure and configured to extend between one or more natural lashes of a user in a substantially transversal direction.
36. The monolithic eyelash segment of statement 35, wherein the monolithic eyelash segment is formed via a three-dimensional printing process.
37. The monolithic eyelash segment of statement 35, wherein a length of a first artificial hair of the array of artificial hairs is less than a length of a second artificial hair of the array of artificial hairs.
38. The monolithic eyelash segment of statement 35, wherein the base structure is curved along the width of the monolithic eyelash segment.
39. The monolithic eyelash segment of statement 35, wherein the array of coupling members is configured to partially wrap around the user's natural lash.
40. The monolithic eyelash segment of statement 35, wherein each coupling member of the array of coupling members define a textured surface configured to increase a contact surface area between the user's natural lash and the monolithic eyelash segment.

## Claims

1. A monolithic eyelash segment comprising:
a base structure defining an elongate body;
a set of individual artificial lash hairs integrally formed with the base structure and extending outwardly from the elongate body along a first direction; and
an array of coupling members integrally formed with the base structure extending outwardly from the elongate body in a second direction that is transverse to the first direction, the array of coupling members configured to structurally engage a set of natural lashes of a wearer to the monolithic eyelash segment.

2. The monolithic eyelash segment of claim 1 wherein:
the base structure, the set of individual artificial lash hairs, and the array of coupling members are integrally formed using a three-dimensional printing process; and
each coupling member of the array of coupling members are configured to extend upwards towards and between the natural lashes of the wearer.

3. The monolithic eyelash segment of claim 1 or claim 2, wherein each coupling member of the array of coupling members defines a respective first end and a second end, the second end curved towards the first end to at least partially define a hook shape.

4. The monolithic eyelash segment of any preceding claim, wherein a respective second end of a first coupling member from the array of coupling members is configured to at least partially wrap around a natural lash from the set of natural lashes.

5. The monolithic eyelash segment of any preceding claim, wherein each coupling member of the array of coupling members defines a respective protrusion configured to be positioned between adjacent natural lashes from the set of natural lashes.

6. The monolithic eyelash segment of any preceding claim, wherein the array of coupling members is arranged linearly along the elongate body.

7. The monolithic eyelash segment of any preceding claim, wherein the array of coupling members comprises at least thirty (30) coupling members.

8. The monolithic eyelash segment of any preceding claim, wherein:
the set of individual artificial lash hairs comprises a first row of artificial lash hairs and a second row of artificial lash hairs; and
the first row of artificial lash hairs and the second row of artificial lash hairs are vertically distributed with respect to the first direction at the base structure.

9. The monolithic eyelash segment of any preceding claim, wherein:
the elongate body defines a first end and a second end; and
at least one of the first end or the second end define a mating surface configured to align to another monolithic eyelash segment.

10. The monolithic eyelash segment of claim 9, wherein the mating surface defines a serrated surface configured to engage to an end of another monolithic eyelash segment.

11. The monolithic eyelash segment of any preceding claim, wherein the base structure is configured to be positioned under a wearer's natural lash.

12. The monolithic eyelash segment of claim 1 wherein the monolithic eyelash segment is formed via a three-dimensional printing process.

13. The monolithic eyelash segment of any preceding claim, wherein the base structure is curved along the width of the monolithic eyelash segment.

14. The monolithic eyelash segment of any preceding claim, wherein a length of a first artificial hair of the set of individual artificial lash hairs is less than a length of a second artificial hair of the set of individual artificial lash hairs.
